# EUROPEAN PATENT APPLICATION

(11) **EP 3 674 657 A1**
(43) Date of publication of application: **01.07.2020**
(21) Application number: 20151998.0
(22) Date of filing: 14.11.2016
(51) Int. Cl.: G01C 11/00, G01C 21/20, G01S 17/89, G01S 13/89

(54) **CONSTRUCTION AND UPDATE OF ELEVATION MAPS**

(62) Divisional of application: 16921047.3
(71) Applicant: SZ DJI Technology Co., Ltd., Shenzhen, Guangdong 518057 (CN)
(72) Inventor: Liu, Ang, Shenzhen, Guangdong 518057 (CN); Zhang, Litian, Shenzhen, Guangdong 518057 (CN); Shen, Shaojie, Shenzhen, Guangdong 518057 (CN)
(74) Representative: Appelt, Christian W.

(57) **Abstract**

Systems and methods for managing two-dimensional (2D) elevation data are provided. A method comprises: receiving, from a first movable object over a first communication network, a first local elevation map comprising an estimated surface height and a confidence indicator associated with the estimated surface height for each of a first set of one or more 2D coordinates; receiving, from a second movable object over a second communication network, a second local elevation map comprising an estimated surface height and a confidence indicator associated with the estimated surface height for each of a second set of one or more 2D coordinates; and resolving, with aid of one or more processors, inconsistency between the first local elevation map and the second local elevation map to update a global elevation map.

## Description

### BACKGROUND

Unmanned vehicles such as unmanned aerial vehicles (UAVs) can be used for performing surveillance, reconnaissance, and exploration tasks in a wide variety of environments for military and civilian applications. A UAV may be manually controlled by a remote user, or may operate in a semi-autonomous or fully autonomous manner. Such UAVs can include processors to automatically determine how its flight paths.

Existing approaches for obtaining environmental data and building corresponding maps may be less than optimal in some instances. For example, some UAVs may need to remain lightweight and thus can generate no or only limited sensor environment data. On the other hand, typical three-dimensional maps can be difficult to build and maintain.

### SUMMARY

Systems and related methods are provided for building and maintaining elevation maps, which indicate surface heights for two-dimensional regions. The elevation maps can be built based on data generated by a small number of sensors onboard light-weight unmanned aerial vehicles (UAVs). They contain useful information related to locations of possible obstacles and are generally easy to maintain. Elevation maps created by different UAVs can be reconciled and consolidated by a central server, enabling the sharing of elevation data created by different UAVs.

In one aspect, a method of building a two-dimensional (2D) elevation map. The method comprises receiving sensor data regarding a 2D coordinate in a 2D coordinate system, wherein the sensor data is acquired by one or more sensors of an aerial vehicle; computing, based on the sensor data, a surface height for the 2D coordinate; assigning, based on the sensor data, a confidence indicator to the computed surface height; and storing the computed surface height and the assigned confidence indicator for the 2D coordinate in a database, thereby building the 2D elevation map.

In some embodiments, the surface height is computed relative to a reference level, and the reference level is a ground level or a sea level. In some embodiments, the one or more sensors include a camera, a radar, a lidar, or an ultrasonic sensor. In some embodiments, the sensor data is acquired by the one or more sensors while the aerial vehicle is in operation. In some embodiments, the sensor data is received according to a predetermined schedule. In some embodiments, the one or more sensors are located in the front, sides, or back of the aerial vehicle.

In some embodiments, the method further comprises receiving one or more parameters associated with the one or more sensors of the aerial vehicle when the sensor data is acquired; and transforming, based on the one or more parameters, the received sensor data from a first coordinate system defined relative to the aerial vehicle into the 2D coordinate system. In some embodiments, the one or more parameters are related to a spatial relationship between the one or more sensors of the aerial vehicle and the aerial vehicle.

In some embodiments, the confidence indicator indicates a relationship between the computed surface height and an actual surface height for the 2D coordinate. In some embodiments, the confidence indicator is assigned a first value, when the computed surface height is a minimum of an actual surface height; the confidence indicator is assigned a second value, when the computed surface height is a maximum of an actual surface height; and the confidence indicator is assigned a third value, when the computed surface height is equal to an actual surface height.

In some embodiments, the confidence indicator is related to a feature related to the aerial vehicle. In some embodiments, the computed surface height for the 2D coordinate is equal to a maximum surface height for a plurality of neighboring coordinates within a predetermined distance from the 2D coordinate.

In some embodiments, the method further comprises transmitting, to a remote system over a communication network, the 2D coordinate, the computed surface height, and the assigned confidence indicator. In some embodiments, the remote system is a cloud-computing platform, a server farm, or a parallel computing device. In some embodiments, the communication network is the Internet, a cellular network, or a short-range wireless network. In some embodiments, the method further comprises detecting a difference between the computed surface height and a previously determined surface height for the 2D coordinate, wherein the transmitting is performed in response to the detecting. In some embodiments, the transmitting is performed based on a predetermined schedule, when an amount of data to be transmitted exceeds a threshold, or in response to a request from the remote system.

In some embodiments, the method further comprises dividing a region comprising a plurality of 2D coordinates into a plurality of blocks; identifying a block to which each 2D coordinate of the plurality of 2D coordinates belong; wherein the storing includes saving the computed surface height and the assigned confidence indicator for the each 2D coordinate in a storage region allocated to the block. In some embodiments, the method further comprises, when no storage region in a local database has been allocated to the block, allocating a storage region in the local database to the block; and when a storage region in the local database has been allocated to the block, locating the storage region. In some embodiments, the method further comprises indexing storage regions allocated to blocks by block numbers and organizing the storage regions in a tree structure. In some embodiments, the method further comprises storing data for neighboring 2D coordinates that belong to a block sequentially in the storage region allocated to the block.

In some embodiments, the method further comprises creating a flight path for the aerial vehicle based on the 2D elevation map. In some embodiments, the receiving, the computing, the assigning, and the storing are performed with aid of one or more processors on-board the aerial vehicle. In some embodiments, at least one of the receiving, the computing, the assigning, and the storing is performed with aid of one or more processors off-board the aerial vehicle..

In another aspect, a system for building a two-dimensional (2D) elevation map is provided. The system comprises at least one memory; and at least one processor connected with the at least one memory and configured to perform: receiving sensor data regarding a 2D coordinate in a 2D coordinate system, wherein the sensor data is acquired by one or more sensors of an aerial vehicle; computing, based on the sensor data, a surface height for the 2D coordinate; assigning, based on the sensor data, a confidence indicator to the computed surface height; and storing the computed surface height and the assigned confidence indicator for the 2D coordinate in a database, thereby building the 2D elevation map.

In yet another aspect, a non-transitory computer-readable storage medium with instructions stored thereon that, when executed by a computing system, cause the computing system to perform a method of building a two-dimensional (2D) elevation map is provided. The method comprises receiving sensor data regarding a 2D coordinate in a 2D coordinate system, wherein the sensor data is acquired by one or more sensors of an aerial vehicle; computing, based on the sensor data, a surface height for the 2D coordinate; assigning, based on the sensor data, a confidence indicator to the computed surface height; and storing the computed surface height and the assigned confidence indicator for the 2D coordinate in a database, thereby building the 2D elevation map.

In another aspect, a method of managing local information stored on an aerial vehicle is provided. The method comprises receiving, by an aerial vehicle from a remote system over a communication network, at least a portion of a global 2D elevation map, wherein the global 2D elevation map includes estimated surface heights and confidence indicators associated with the estimated surface heights for a first plurality of 2D coordinates; and resolving, with aid of one or more processors, inconsistency between the local information stored on the aerial vehicle and the global 2D elevation map, thereby managing the local information.

In some embodiments, the local information includes a local 2D elevation map, wherein the local 2D elevation map includes estimated surface heights and confidence indicators associated with the estimated surface heights determined by the aerial vehicle for a second plurality of 2D coordinates. In some embodiments, the resolving comprises adding, to the local 2D elevation map, data in the global 2D elevation map for all 2D coordinates that do not belong to the second plurality of 2D coordinates. In some embodiments, the resolving comprising replacing, for one or more 2D coordinates that are in both the first and the second plurality of 2D coordinates, data in the local 2D elevation map with corresponding data in the global 2D elevation map. In some embodiments, the local 2D elevation map also includes, for at least one of the second plurality of 2D coordinates, a timestamp indicating when sensor data from which an estimated surface height and associated one or more confidence indicators were derived were acquired, in the local 2D elevation map. In some embodiments, the method further comprises transmitting, to the remote system, data in the local 2D elevation map based on a result of the resolving. In some embodiments, the data transmitted to the remote system includes data in the local 2D elevation map for all 2D coordinates that do not belong to the first plurality of 2D coordinates. In some embodiments, the transmitted data includes data in the local 2D elevation map for one or more 2D coordinates that belong to the first plurality of 2D coordinates. In some embodiments, the method further comprises selecting the one or more 2D coordinates based on a comparison of a combination of an estimated surface height and a confidence indicator for each 2D coordinate in the local map and in the global map.

In some embodiments, the resolving includes adding the global 2D elevation map to the local information.

In some embodiments, the method further comprises updating the local information based on a result of the resolving; and storing the updated the local information on the aerial vehicle.

In some embodiments, the method further comprises transmitting an identifier of the aerial vehicle to the remote system.

In some embodiments, the method further comprises transmitting a request to the remote system for the global 2D elevation map, in response to which the global 2D elevation map is received. In some embodiments, the request indicates a specific region, and the global map includes data corresponding to the specific region. In some embodiments, each confidence indicator associated with an estimated surface height is related to one or more of the followings: a) a feature related to the aerial vehicle, b) an environmental condition associated with the aerial vehicle, or c) a condition of a sensor onboard the aerial vehicle used to generate data from which the estimated surface height is computed, at a time when the sensor generates the data.

In some embodiments, the one or more processors are onboard the aerial vehicle. In some embodiments, the receiving and the resolving are performed when the aerial vehicle is airborne.

In another aspect, a system for updating local information with a global 2D elevation map is provided. The system comprises at least one memory; and at least one processor connected with the at least one memory and configured to perform: receiving, from a remote system over a communication network, at least a portion of a global 2D elevation map, wherein the global 2D elevation map includes estimated surface heights and confidence indicators associated with the estimated surface heights for a first plurality of 2D coordinates; and resolving, with aid of one or more processors, inconsistency between the local information stored on the aerial vehicle and the global 2D elevation map, thereby managing the local information.

In another aspect, a non-transitory computer-readable storage medium with instructions stored thereon that, when executed by a computing system, cause the computing system to perform a method of updating local information with a global 2D elevation map is provided. The method comprises receiving, from a remote system over a communication network, at least a portion of a global 2D elevation map, wherein the global 2D elevation map includes estimated surface heights and confidence indicators associated with the estimated surface heights for a first plurality of 2D coordinates; and resolving, with aid of one or more processors, inconsistency between the local information stored on the aerial vehicle and the global 2D elevation map, thereby managing the local information.

In yet another aspect, a method of managing two-dimensional (2D) elevation data is provided. The method comprises receiving, from a first movable object over a first communication network, a first local elevation map comprising an estimated surface height and a confidence indicator associated with the estimated surface height for each of a first set of one or more 2D coordinates; receiving, from a second movable object over a second communication network, a second local elevation map comprising an estimated surface height and a confidence indicator associated with the estimated surface height for each of a second set of one or more 2D coordinates; and resolving, with aid of one or more processors, inconsistency between the first local elevation map and the second local elevation map to update a global elevation map.

In some embodiments, the method further comprises sending a request to one or more aerial vehicles for elevation maps, wherein the first or the second local elevation map is received in response to the request.

In some embodiments, the first or the second movable objects is an aerial vehicle. In some embodiments, each confidence indicator associated with an estimated surface height is related to one or more of the following: a) a feature related to the aerial vehicle, b) an environmental condition associated with the aerial vehicle, or c) a condition of a sensor onboard the aerial vehicle, the sensor used to generate data from which the estimated surface height is computed. In some embodiments, the condition of the sensor includes a sensor resolution. In some embodiments, the environment condition includes a light condition or a GPS signal strength.

In some embodiments, the resolving includes, for a 2D coordinate that belongs to both the first and the second sets of 2D coordinates, selecting, for inclusion into the global elevation map, estimated surface height and confidence indicator for the 2D coordinate in the first local elevation map over the second local elevation map when the confidence indicator for the 2D point in the first local elevation map is larger than the confidence indicator for the 2D point in the second local elevation map. In some embodiments, the resolving is performed, for a 2D coordinate that belongs to the first and the second sets of 2D coordinates, based on a comparison between a combination of the estimated surface height and the associated confidence indicator for the 2D coordinate in the first local elevation map and a combination of the estimated surface height and the associated confidence indicator for the 2D coordinate in the second local elevation map. In some embodiments, the resolving includes, for the 2D coordinate, selecting, for inclusion into the global elevation map, estimated surface height and confidence indicator in the first local elevation map over the second local elevation map when the estimated surface height in the first local elevation map is larger than in the second local elevation map and the confidence indicator in the first local elevation map is larger than a predetermined threshold.

In some embodiments, the first local elevation map also includes, for a 2D coordinate that belongs to the first and second sets of 2D coordinates, a timestamp indicating when sensor data from which the estimated surface height and the associated confidence indicator were derived were acquired, and the second local elevation map includes, for the 2D coordinate, a timestamp indicating when the estimated surface height and the associated confidence indicator were updated. In some embodiments, the resolving includes, for the 2D coordinate, selecting, for inclusion in the global elevation map, estimated surface height and confidence indicator in the first local elevation map when the timestamp in the first local elevation map indicates a later time than the timestamp in the second local elevation map.

In some embodiments, the first local elevation map includes, for a 2D coordinate that belong to both the first and second sets of 2D coordinates, an identifier of a first aerial vehicle that contributed to creating estimated surface height and confidence indicator in the first local elevation map, and the second local elevation map includes, for the 2D coordinate, an identifier of a second aerial vehicle that contributed to creating estimated surface height and confidence indicator in the second local elevation map. In some embodiments, the method further comprises prioritizing a plurality of aerial vehicles, including the first and the second aerial vehicles, wherein the resolving includes, for the 2D coordinate, selecting, for inclusion estimated surface height and confidence indicator in the global elevation map, estimated surface height and confidence indicator in the first local elevation map when the first aerial vehicle has a higher priority than the second aerial vehicle. In some embodiments, the prioritizing is based on a condition associated with each aerial vehicle of the plurality of aerial vehicles or a sensor onboard the each aerial vehicle.

In some embodiments, the method further comprises transmitting part or all of the global elevation map to one or more aerial vehicles. In some embodiments, the method further comprises receiving a request from a third aerial vehicle for the global elevation map, wherein the transmitting is performed in response to the request. In some embodiments, the transmitting is performed in response to an update to the global map.

In some embodiments, the first local elevation map further comprises a height range associated with the estimated surface height for one of the first set of 2D coordinates, and the second local elevation map further comprises a height range associated with the estimated surface height for one the second set of 2D coordinates. In some embodiments, a height range associated with an estimated surface height indicates a height range of a sensor which acquired the data that led to the estimated surface height at the time of data acquisition. In some embodiments, the resolving is performed for a 2D coordinate that belongs to both the first and the second sets of 2D coordinates only when the height ranges for the 2D coordinate in the first and second local elevation maps are identical. In some embodiments, the method further comprises, for a 2D coordinate that belongs to both the first and the second sets of 2D coordinates, when the height range in the first local elevation map is less than the height range in the second local elevation map, selecting for inclusion in the global elevation map estimated surface height and confidence indicator in the second local elevation map.

In some embodiments, the method further comprises logging an update to the global elevation map. In some embodiments, the method further comprises color-coding estimated surface heights or confidence indicators in the global elevation map; and sending a graphical representation of the global map based on the color coding to a display device.

In another aspect, a system for managing two-dimensional (2D) elevation data is provided. The system comprises at least one memory; at least one processor connected with the at least one memory and configured to perform: receiving, from a first movable object over a first communication network, a first local elevation map comprising an estimated surface height and a confidence indicator associated with the estimated surface height for each of a first set of 2D coordinate(s); receiving, from a second movable object over a second communication network, a second local elevation map comprising an estimated surface height and a confidence indicator associated with the estimated surface height for each of a second set of 2D coordinate(s); resolving, with aid of one or more processors, inconsistency with respect to the estimated surface height or the confidence indicator between the first local elevation map and the second local elevation map to update a global elevation map.

In another aspect, a non-transitory computer-readable storage medium with instructions stored thereon that, when executed by a computing system, cause the computing system to perform a method of managing two-dimensional (2D) elevation data is provided. The method comprises receiving, from a first movable object over a first communication network, a first local elevation map comprising an estimated surface height and a confidence indicator associated with the estimated surface height for each of a first set of 2D coordinate(s); receiving, from a second movable object over a second communication network, a second local elevation map comprising an estimated surface height and a confidence indicator associated with the estimated surface height for each of a second set of 2D coordinate(s); resolving, with aid of one or more processors, inconsistency with respect to the estimated surface height or the confidence indicator between the first local elevation map and the second local elevation map to update a global elevation map.

It shall be understood that different aspects of the invention can be appreciated individually, collectively, or in combination with each other. Various aspects of the invention described herein may be applied to any of the particular applications set forth below or for any other types of movable objects. Any description herein of an aerial vehicle may apply to and be used for any movable object, such as any vehicle. Additionally, the systems, devices, and methods disclosed herein in the context of aerial motion (e.g., flight) may also be applied in the context of other types of motion, such as movement on the ground or on water, underwater motion, or motion in space. Furthermore, any description herein of a rotor or rotor assembly may apply to and be used for any propulsion system, device, or mechanism configured to generate a propulsive force by rotation (e.g., propellers, wheels, axles).

Other objects and features of the present invention will become apparent by a review of the specification, claims, and appended figures.

### INCORPORATION BY REFERENCE

All publications, patents, and patent applications mentioned in this specification are herein incorporated by reference to the same extent as if each individual publication, patent, or patent application was specifically and individually indicated to be incorporated by reference.

### BRIEF DESCRIPTION OF THE DRAWINGS

The novel features of the invention are set forth with particularity in the appended claims. A better understanding of the features and advantages of the present invention will be obtained by reference to the following detailed description that sets forth illustrative embodiments, in which the principles of the invention are utilized, and the accompanying drawings of which:
**FIG 1** illustrates a UAV operating in an outdoor environment, in accordance with embodiments;
**FIG 2** illustrates a UAV operating in an indoor environment, in accordance with embodiments;
**FIG. 3** illustrates an environment in which the system disclosed in the present application can operate.
**FIG. 4** illustrates example components of a UAV processor.
**FIG. 5** illustrates example components of the central server.
**FIG. 6** illustrates how a UAV can obtain information for use in an elevation map.
**FIG. 7** illustrates how a UAV can obtain information for use in an elevation map.
**FIG. 8** illustrates how a UAV can obtain information for use in an elevation map.
**FIG. 9** illustrates how a UAV can obtain information for use in an elevation map.
**FIG. 10** illustrates how a UAV builds an elevation map from sensor data.
**FIG. 11** illustrates an example 3D representation of an elevation map.
**FIG. 12** illustrates a scenario where multiple surface heights exist for a 2D coordinate.
**FIG. 13** illustrates an example process performed by the UAV of building an elevation map.
**FIG. 14** illustrates how UAVs may share data to create global maps.
**FIG. 15** illustrates an example process performed by the central server of managing global elevation maps.
**FIG. 16** illustrates an example process performed by a UAV of managing local elevation maps.
**FIG. 17** illustrates a UAV, in accordance with embodiments;
**FIG. 18** illustrates a movable object including a carrier and a payload, in accordance with embodiments; and
**FIG. 19** shows a computer system that can be configured to implement any computing system disclosed in the present application.

### DETAILED DESCRIPTION

Systems and methods for creating and maintaining a map are provided. The map may be useful when controlling movable objects, such as an unmanned aerial vehicle (UAV). The map may be an elevation map, which may indicate surface heights for two-dimensional regions with respect to a reference level, which is typically a static ground level or sea level. They contain useful information related to topography and locations of possible obstacles.

The elevation maps can be built based on data generated by sensors onboard UAVs. In some embodiments, the UAV can be adapted to carry a plurality of sensors configured to collect environmental data. Some of the sensors may be of different types (e.g., a vision sensor used in combination with a proximity sensor). The UAV can use the generated map to perform various operations, some of which may be semi-automated or fully automated. For instance, in some embodiments, the elevation map can be used to automatically determine a flight path for the UAV to navigate from its current location to a target location. As another example, the elevation map can be used to determine the spatial disposition of one or more obstacles and thereby enable the UAV to perform obstacle avoidance maneuvers. Advantageously, the use of multiple sensor types for collecting environmental data as disclosed herein can improve the accuracy of mapping even in diverse environments and operating conditions, thereby enhancing the robustness and flexibility of UAV functionalities such as navigation and obstacle avoidance.

Elevation maps created by different UAVs can be reconciled and consolidated by a central server, enabling the sharing of elevation data created by different UAVs. This may advantageously allow UAVs to have access to elevation data in areas that they have not previously traversed. The sharing of information by multiple UAVs may allow individual UAVs to navigate an environment with aid of more data. In some embodiments, local portions of the elevation map may be provided to the UAV based on their current location. This may provide the advantages of sharing data between multiple UAVs while taking up only the amount of memory and/or processes needed for the UAV to access the portion of a map that is relevant to them.

The embodiments provided herein can be applied to various types of UAVs. For instance, the UAV may be a small-scale UAV that weighs no more than 10 kg and/or has a maximum dimension of no more than 1.5 m. In some embodiments, the UAV may be a rotorcraft, such as a multi-rotor aircraft that is propelled to move through the air by a plurality of propellers (e.g., a quadcopter). Additional examples of UAVs and other movable objects suitable for use with the embodiments presented herein are described in further detail below.

The UAVs described herein can be operated completely autonomously (e.g., by a suitable computing system such as an onboard controller), semi-autonomously, or manually (e.g., by a human user). The UAV can receive commands from a suitable entity (e.g., human user or autonomous control system) and respond to such commands by performing one or more actions. For example, the UAV can be controlled to take off from the ground, move within the air (e.g., with up to three degrees of freedom in translation and up to three degrees of freedom in rotation), move to target location or to a sequence of target locations, hover within the air, land on the ground, and so on. As another example, the UAV can be controlled to move at a specified velocity and/or acceleration (e.g., with up to three degrees of freedom in translation and up to three degrees of freedom in rotation) or along a specified movement path. Furthermore, the commands can be used to control one or more UAV components, such as the components described herein (e.g., sensors, actuators, propulsion units, payload, etc.). For instance, some commands can be used to control the position, orientation, and/or operation of a UAV payload such as a camera. Optionally, the UAV can be configured to operate in accordance with one or more predetermined operating rules. The operating rules may be used to control any suitable aspect of the UAV, such as the position (e.g., latitude, longitude, altitude), orientation (e.g., roll, pitch yaw), velocity (e.g., translational and/or angular), and/or acceleration (e.g., translational and/or angular) of the UAV. For instance, the operating rules can be designed such that the UAV is not permitted to fly beyond a threshold height, e.g., the UAV can be configured to fly at a height of no more than 400 m from the ground. In some embodiments, the operating rules can be adapted to provide automated mechanisms for improving UAV safety and preventing safety incidents. For example, the UAV can be configured to detect a restricted flight region (e.g., an airport) and not fly within a predetermined distance of the restricted flight region, thereby averting potential collisions with aircraft and other obstacles.

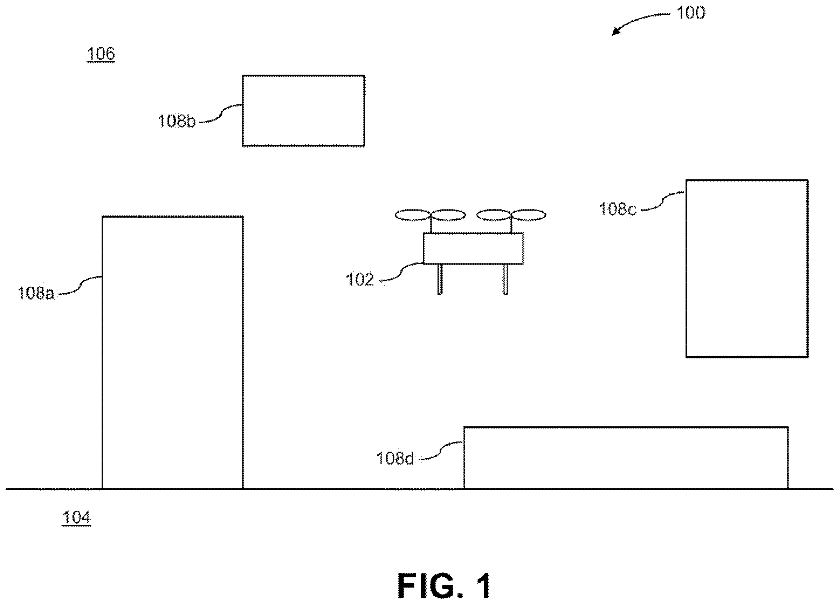

Turning now the drawings, **FIG. 1** illustrates a UAV 102 operating in an outdoor environment 100, in accordance with embodiments. The outdoor environment 100 may be an urban, suburban, or rural setting, or any other environment that is not at least partially within a building. The UAV 102 may be operated relatively close to the ground 104 (e.g., low altitude) or relatively far from the ground 104 (e.g., high altitude). For example, a UAV 102 operating less than or equal to approximately 10 m from the ground may be considered to be at low altitude, while a UAV 102 operating at greater than or equal to approximately 10m from the ground may be considered to be at high altitude.

In some embodiments, the outdoor environment 100 includes one or more obstacles 108a-d. An obstacle may include any object or entity that may obstruct the movement of the UAV 102. Some obstacles may be situated on the ground 104 (e.g., obstacles 108a, 108d), such as buildings, ground vehicles (e.g., cars, motorcycles, trucks, bicycles), human beings, animals, plants (e.g., trees, bushes), and other manmade or natural structures. Some obstacles may be in contact with and/or supported by the ground 104, water, manmade structures, or natural structures. Alternatively, some obstacles may be wholly located in the air 106 (e.g., obstacles 108b, 108c), including aerial vehicles (e.g., airplanes, helicopters, hot air balloons, other UAVs) or birds. Aerial obstacles may not be supported by the ground 104, or by water, or by any natural or manmade structures. An obstacle located on the ground 104 may include portions that extend substantially into the air 106 (e.g., tall structures such as towers, skyscrapers, lamp posts, radio towers, power lines, trees, etc.).

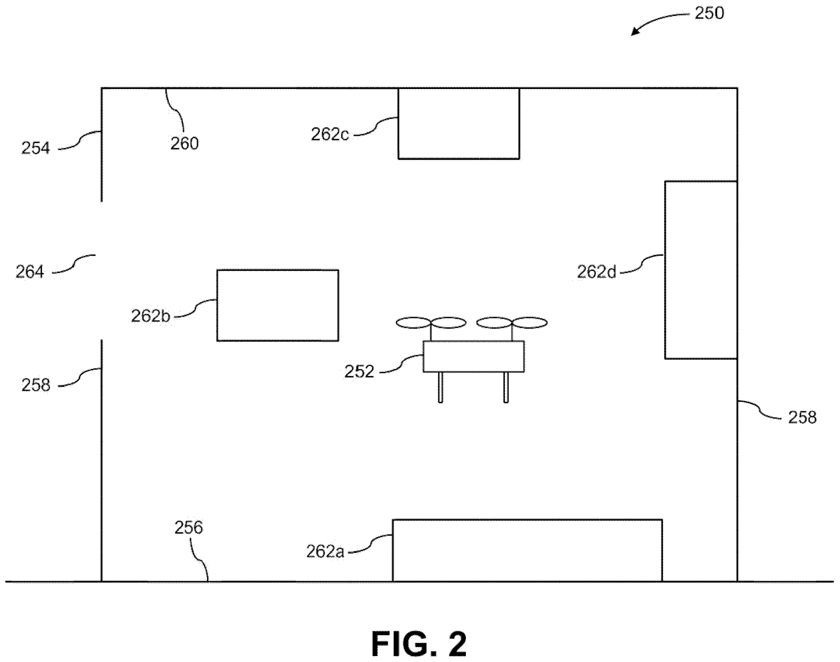

**FIG. 2** illustrates a UAV 252 operating in an indoor environment 250, in accordance with embodiments. The indoor environment 250 is within the interior of a building 254 having a floor 256, one or more walls 258, and/or a ceiling or roof 260. Exemplary buildings include residential, commercial, or industrial buildings such as houses, apartments, offices, manufacturing facilities, storage facilities, and so on. The interior of the building 254 may be completely enclosed by the floor 256, walls 258, and ceiling 260 such that the UAV 252 is constrained to the interior space. Conversely, at least one of the floor 256, walls 258, or ceiling 260 may be absent, thereby enabling the UAV 252 to fly from inside to outside, or vice-versa. Alternatively or in combination, one or more apertures 264 may be formed in the floor 256, walls 258, or ceiling 260 (e.g., a door, window, or skylight).

Similar to the outdoor environment 200, the indoor environment 250 can include one or more obstacles 262a-d. Some obstacles may be situated on the floor 256 (e.g., obstacle 262a), such as furniture, appliances, human beings, animals, plants, and other manmade or natural objects. Conversely, some obstacles may be located in the air (e.g., obstacle 262b), such as birds or other UAVs. Some obstacles in the indoor environment 250 can be supported by other structures or objects. Obstacles may also be attached to the ceiling 260 (e.g., obstacle 262c), such as light fixtures, ceiling fans, beams, or other ceiling-mounted appliances or structures. In some embodiments, obstacles may be attached to the walls 258 (e.g., obstacle 262d), such as light fixtures, shelves, cabinets, and other wall-mounted appliances or structures. Notably, the structural components of the building 254 can also be considered to be obstacles, including the floor 256, walls 258, and ceiling 260.

The obstacles described herein may be substantially stationary (e.g., buildings, plants, structures) or substantially mobile (e.g., human beings, animals, vehicles, or other objects capable of movement). Some obstacles may include a combination of stationary and mobile components (e.g., a windmill). Mobile obstacles or obstacle components may move according to a predetermined or predictable path or pattern. For example, the movement of a car may be relatively predictable (e.g., according to the shape of the road). Alternatively, some mobile obstacles or obstacle components may move along random or otherwise unpredictable trajectories. For example, a living being such as an animal may move in a relatively unpredictable manner.

In order to ensure safe and efficient operation, it may be beneficial to provide the UAV with mechanisms for detecting and identifying environmental objects such as obstacles. Additionally, recognition of environmental objects such as landmarks and features can facilitate navigation, particularly when the UAV is operating in a semi-autonomous or fully autonomous manner. Furthermore, knowledge of the UAV's precise location within the environment, as well as its spatial relationship to surrounding environmental objects, can be valuable for a wide variety of UAV functionalities. The UAV may utilize one or more environmental maps to determine its location within the environment and access information relating to objects, such as topographic features, obstacles, landmarks, and so forth. The UAV may create the map or a portion of the map with aid of one or more sensors on-board the UAV. Alternatively or in addition, the map may include data collected by sensors on-board one or more other UAVs. Accordingly, the UAVs described herein can include one or more sensors configured to collect relevant data, such as information relating to the UAV state, the surrounding environment, or the objects within the environment. Exemplary sensors suitable for use with the embodiments disclosed herein include location sensors (e.g., global positioning system (GPS) sensors, mobile device transmitters enabling location triangulation), vision sensors (e.g., imaging devices capable of detecting visible, infrared, or ultraviolet light, such as cameras), proximity or range sensors (e.g., ultrasonic sensors, lidar, time-of-flight or depth cameras), inertial sensors (e.g., accelerometers, gyroscopes, inertial measurement units (IMUs)), altitude sensors, attitude sensors (e.g., compasses) pressure sensors (e.g., barometers), audio sensors (e.g., microphones) or field sensors (e.g., magnetometers, electromagnetic sensors). Any suitable number and combination of sensors can be used, such as one, two, three, four, five, or more sensors. Optionally, the data can be received from sensors of different types (e.g., two, three, four, five, or more types). Sensors of different types may measure different types of signals or information (e.g., position, orientation, velocity, acceleration, proximity, pressure, etc.) and/or utilize different types of measurement techniques to obtain data. For instance, the sensors may include any suitable combination of active sensors (e.g., sensors that generate and measure energy from their own energy source) and passive sensors (e.g., sensors that detect available energy). As another example, some sensors may generate absolute measurement data that is provided in terms of a global coordinate system (e.g., position data provided by a GPS sensor, attitude data provided by a compass or magnetometer), while other sensors may generate relative measurement data that is provided in terms of a local coordinate system (e.g., relative angular velocity provided by a gyroscope; relative translational acceleration provided by an accelerometer; relative attitude information provided by a vision sensor; relative distance information provided by an ultrasonic sensor, lidar, or time-of-flight camera). In some instances, the local coordinate system may be a body coordinate system that is defined relative to the UAV.

The sensors described herein can be carried by the UAV. A sensor can be situated on any suitable portion of the UAV, such as above, underneath, on the side(s) of, or within a vehicle body of the UAV. Some sensors can be mechanically coupled to the UAV such that the spatial disposition and/or motion of the UAV correspond to the spatial disposition and/or motion of the sensors. The sensor can be coupled to the UAV via a rigid coupling, such that the sensor does not move relative to the portion of the UAV to which it is attached. Alternatively, the coupling between the sensor and the UAV can permit movement of the sensor relative to the UAV. The coupling can be a permanent coupling or non-permanent (e.g., releasable) coupling. Suitable coupling methods can include adhesives, bonding, welding, and/or fasteners (e.g., screws, nails, pins, etc.). Optionally, the sensor can be integrally formed with a portion of the UAV. Furthermore, the sensor can be electrically coupled with a portion of the UAV (e.g., processing unit, control system, data storage) so as to enable the data collected by the sensor to be used for various functions of the UAV (e.g., navigation, control, propulsion, communication with a user or other device, etc.), such as the embodiments discussed herein.

The sensors can be configured to collect various types of data, such as data relating to the UAV, the surrounding environment, or objects within the environment. For example, at least some of the sensors may be configured to provide data regarding a state of the UAV. The state information provided by a sensor can include information regarding a spatial disposition of the UAV (e.g., location or position information such as longitude, latitude, and/or altitude; orientation or attitude information such as roll, pitch, and/or yaw). The state information can also include information regarding motion of the UAV (e.g., translational velocity, translation acceleration, angular velocity, angular acceleration, etc.). A sensor can be configured, for instance, to determine a spatial disposition and/or motion of the UAV with respect to up to six degrees of freedom (e.g., three degrees of freedom in position and/or translation, three degrees of freedom in orientation and/or rotation). The state information may be provided relative to a global coordinate system or relative to a local coordinate system (e.g., relative to the UAV or another entity). For example, a sensor can be configured to determine the distance between the UAV and the user controlling the UAV, or the distance between the UAV and the starting point of flight for the UAV.

The data obtained by the sensors may provide various types of environmental information. The environmental information collected by the sensors may include information regarding the objects in the environment, such as the obstacles described herein. Obstacle information may include information regarding the number, density, shape, geometry, and/or spatial disposition of obstacles in the environment. Furthermore, the sensor data may be indicative of an environment type, such as an indoor environment, outdoor environment, low altitude environment, or high altitude environment. The sensor data may also provide information regarding current environmental conditions, including weather (e.g., clear, rainy, snowing), visibility conditions, wind speed, time of day, and so on.

In some embodiments, sensing results are generated by combining sensor data obtained by multiple sensors, also known as "sensor fusion." For instance, sensor fusion can be used to combine sensing data obtained by different sensor types, including as GPS sensors, inertial sensors, vision sensors, lidar, ultrasonic sensors, and so on. As another example, sensor fusion can be used to combine different types of sensing data, such as absolute measurement data (e.g., data provided relative to a global coordinate system such as GPS data) and relative measurement data (e.g., data provided relative to a local coordinate system such as vision sensing data, lidar data, or ultrasonic sensing data). Sensor fusion can be used to compensate for limitations or inaccuracies associated with individual sensor types, thereby improving the accuracy and reliability of the final sensing result.

Systems and related methods are provided for building and maintaining elevation maps for a group of UAVs. In some embodiments, a UAV collects data during its flight and builds two-dimensional (2D) or three-dimensional (3D) maps based on the collected data. As one example, the UAV can keep track of the presence or absence of any object in the airspace. As another example, the UAV can track various types of wireless transmission, for incoming GPS signals, incoming control signals, outgoing data signals, etc. A resulting signal map can provide the UAV with reference signal strengths in a particular airspace. For instance, the UAV may be able to detect elevation data relating to objects in a nearby airspace. The elevation data may be elevation of underlying terrain, and/or any buildings or structures presented thereon. The elevation data may be indicative of objects that the UAV may wish to avoid.

In addition to data collected by its sensors, the UAV can incorporate data collected by other UAVs or recorded in other data sources before or during the flight or at any time. For example, various terrain maps and weather maps are available for public consumption. The UAV can also update its maps for specific coordinates based on new data generated by it sensors or obtained from other sources at any time.

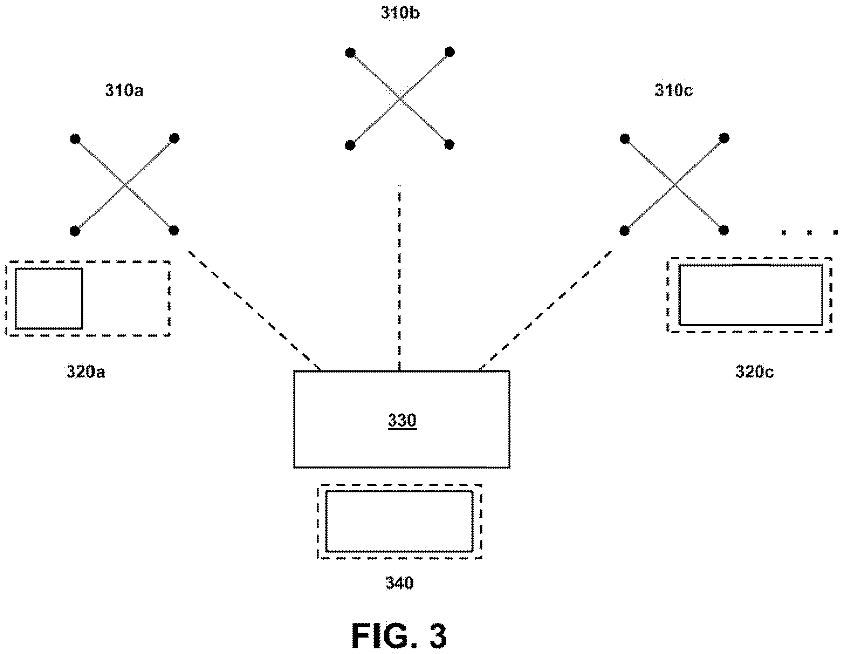

**FIG. 3** illustrates an environment in which the system disclosed in the present application can operate. In some embodiments, for each UAV 310a, 310b, or 310c in a group to utilize maps made by other UAVs in the group, the UAVs in the group need to share their respective maps. It is preferable to have a central server 330 or a set of distributed, coordinated central servers capable of reconciling maps made by multiple UAVs so that each UAV in the group can access consistent, high-quality map data. The central server 330 can be a cloud-computing platform, a server farm, a parallel computing device, and so on, that has sufficient computing sources and data storage to efficiently handle a large amount of data. The central server 330 can also rely on computer power provided by personal computing devices, such as a cellular phone, a laptop computer, a desktop computer, a tablet, etc. UAVs 310a and 310c, for example, can send their local maps 320a and 320c to the central server 330, which can then reconcile or otherwise combine different local maps into a global map 340. Each UAV 310 can also synchronize its local map with the global map. In some embodiments, servers separate from the UAVs can process local maps stored on the UAVs and manage local maps for the UAVs. Thus, such servers can serve as middlemen between the UAVs and the central server 330. These local servers can also incorporate personal computing devices, as described above. The central server 330 and/or such local servers can be provided by third party services, operators of the UAVs, government agencies, etc. The UAVs 310a-c can communicate with the central server and/or the local servers through one or more wired or wireless networks, such as direct, short-range communication channels (e.g., infrared) or indirect communication channels (e.g., cellular).

In some embodiments, each UAV 310 sends sensor data to the central server 330 and relies on the central server 330 to build a corresponding map. The central server 330 can transmit a copy of the resulting map back to the UAV 310, resolve any difference or conflict between that copy and what is in the global map. In some instances, the server may resolve a difference between that copy and what is in the global map when the difference is equal to or greater than a predetermined threshold. The global map may be expanded based on that copy as appropriate. Each UAV 310 can also pre-process the sensor data to perform some of the steps of building a map and rely on the central server 330 to perform the other steps, including coordinate system transformation, as discussed below.

In alternative embodiments, the UAVs communicate with one another directly without the coordination of a central server. For example, they can exchange local maps via direct, short-range communication channels when they're located within each other's wireless transmission range. Those UAVs that tend to fly within a small cluster of regions can decide to share local maps among themselves rather than receiving and sending any elevation data from and to the central server.

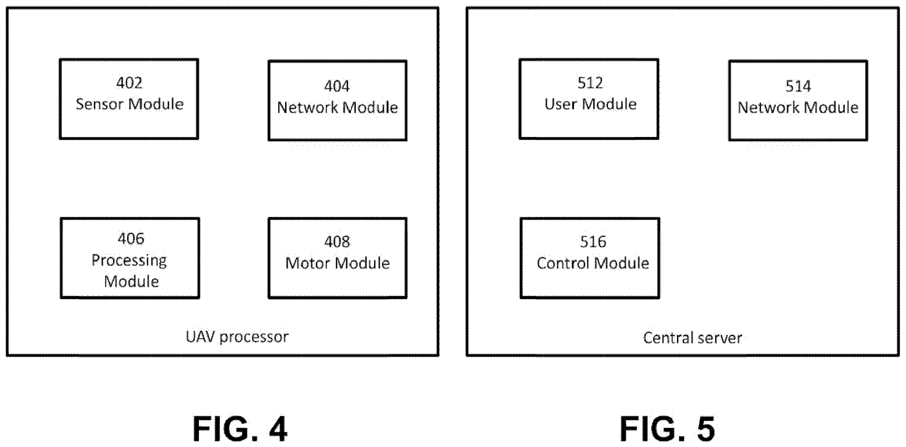

Systems and related methods are provided for building and maintaining elevation maps by UAVs and a central server. **FIG. 4** illustrates example components of a system onboard a UAV. In some embodiments, the system comprises a sensor module 402, a network module 404, a processing module 406, and/or a motor module 408. The sensor module 402 is configured to communicate with one or more sensors onboard the UAV. The sensor module 402 can receive data from the sensors or transmit control signals to the sensors. The network module 404 is configured to communicate with a remote device, such as the central server or another processor external to the UAV, over a communication network, such as a cellular network or a satellite network. The network module 404 can receive a global map from the central server or transmit data in a local map to the central server. The processing module 406 is configured to analyze data and generate control signals. The processing module 406 can analyze data received from the other modules, including sensor data from the sensor module 402 and global maps from the network module 404, and build or update local maps. The processing module 406 can also send data to the other modules, including motor commands to the motor module 408 to direct the motor to follow specific flight paths based on the local maps. The motor module 408 is configured to communicate with one or more motors onboard the UAV. The motor module 408 can receive data from the motor, which may indicate failures or other abnormal conditions, or transmit control signals to the motor, mainly to direct the UAV to move, e.g., to follow specific flight paths.

**FIG. 5** illustrates example components of the central server. In some embodiments, the system comprises an optional user module 512, a network module 514, and/or a control module 516. The user module 512 is configured to communicate with a user. The user module may be an input/output (I/O) module that may receive user input and/or provide output to the user. The user module can optionally provide a graphical user interface (GUI) or otherwise allow a user to access a global map managed by the central server. The network module 514 is configured to communicate with an external device, such as a UAV, another server, or a user device, such as a desktop computer, a laptop computer, cellular phone, a tablet, a wearable device, etc., over a communication network. The network module 514 can receive data in local maps from a UAV or transmit data in part or all of global maps to a UAV. The network module 514 can also provide an application programming interface (API) to allow another device to analyze or otherwise access data in global maps. The control module 516 is configured to process data. It can resolve difference or inconsistencies among local maps received from UAVs. In some instances, the control module may resolve a difference between that copy and what is in the global map when the difference is equal to or greater than a predetermined threshold. The control module can also generate reports on data in global maps, etc.

These modules can be implemented as general or specific-purpose hardware, software, or firmware (or any combination thereof) components. Modules are typically functional components that can generate useful data or other output using specified input(s). A module may or may not be self-contained. Depending upon implementation-specific or other considerations, the modules may be centralized or distributed functionally or physically. The interactions among these modules are described in detail below.

In some embodiments, in order for a UAV to have a higher flying efficiency, the UAV includes only one sensor or a small number of sensors for a reduced weight or design complexity. The sensor can be located in the front with a detection range extending away the front of the UAV. In addition, the UAV can include a sensor that is positioned on the back or the side of the UAV where it can have a proper detection range. The sensor can also be positioned on the bottom of the UAV with a detection range extending from the bottom of the UAV. Such a sensor can be useful when the UAV is rotated so that the sensor does not directly face a reference level. In addition, the sensor can be angled in any manner. For instance, that sensor located in the front of the UAV may be rotated 90 degrees so that the detection range is not limited to what is in front of the UAV but may cover what is to the side of the UAV. Furthermore, the sensor may move within the UAV and the changing positions may be tracked to keep track of known spatial disposition of the detection range.

In some embodiments, the sensor may be capable of detecting the presence of an object with respect to the UAV. The sensor may detect the object using vision, heat, sound, vibrations, and/or any other techniques. The sensor may or may not utilize reflected signals, and the sensor may be capable of detecting a distance of the object from the UAV. For example, a camera can capture a view with certain resolution, or a laser can detect distance to objects with certain accuracy, within the detection range that can be characterized by a certain height, width, and depth with respect to the position of the sensor. The sensor data can be processed to build an elevation map, which indicates surface height information for each point in a 2D coordinate system with respect to a reference level, such as the ground level or sea level. The surface height can also be determined using one or more sensors, such as a GPS receiver generating a 3D coordinate that is to be projected onto the reference level or a barometer generating a value that is to be converted to a distance from the sea level. The scale of the 2D coordinate system can vary. For example, each unit in the 2D coordinate system can correspond to a one square meter, and all the 3D coordinates which are projected onto the same unit have the same 2D coordinate. In another example, the 2D coordinate system and the 3D coordinate system may have different scales. When a sensor detects different heights for different points having the same 2D coordinate, such as the points on an uneven top of a building within the detection range, the sensor can choose the maximum detected height as the surface height for that 2D coordinate.

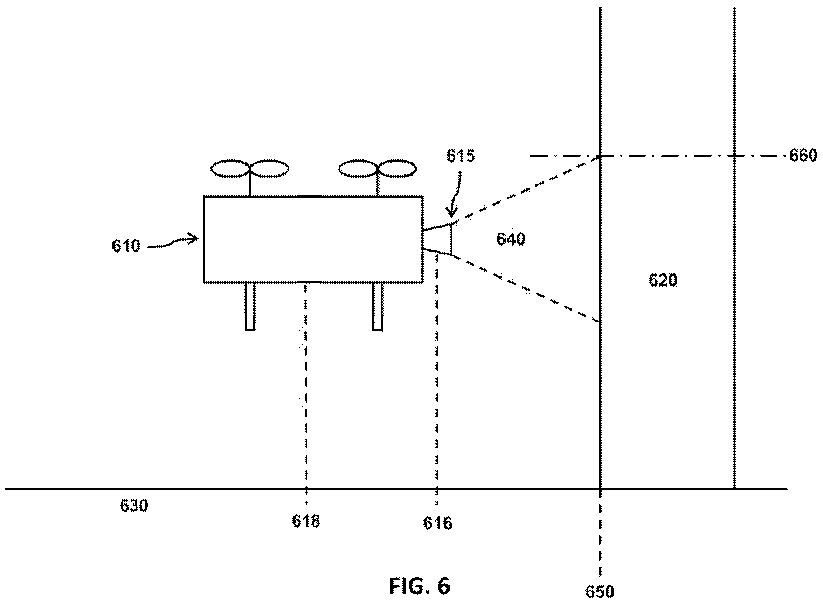

In some embodiments, the UAV builds an elevation map from analyzing sensor data. **FIGS. 6-9** illustrate how a UAV can obtain information for use in an elevation map. The UAV 610 may have a sensor 615 with a detection range 640. The location of the UAV can be mapped to the point 618 on the reference level 630, and the location of the sensor in particular can be mapped to the point 616 on the reference level 630.

In **FIG. 6****,** an object 620 that extends from a reference level 630 at the point 650 intersects the detection range 640. However, only a mid-portion of the object 620 is in the detection range, while the top of the object 620 is not. By analyzing the data generated by the sensor 615 corresponding to the detection range 640, the UAV can conclude that the top of the object 620 is higher than the top of the detection range 660, or in other words, the distance from top of the detection range 660 to the reference level is a minimum value for the surface height at the point 650. Therefore, the UAV can store in the elevation map that distance or its margin of error as an estimate of the surface height at the point 650 having a 2D coordinate with respect to the reference level and a category indicating that the estimated value is a lower threshold or a minimum value for the surface height ("red category" hereinafter). This category generally signals the presence of an obstacle at the estimated surface height and possible at higher heights, and thus a high risk of crashing into an obstacle near the estimated surface height. A UAV would have fewer choices in avoiding the obstacle and thus may want to avoid points having 2D coordinates associated with the red category.

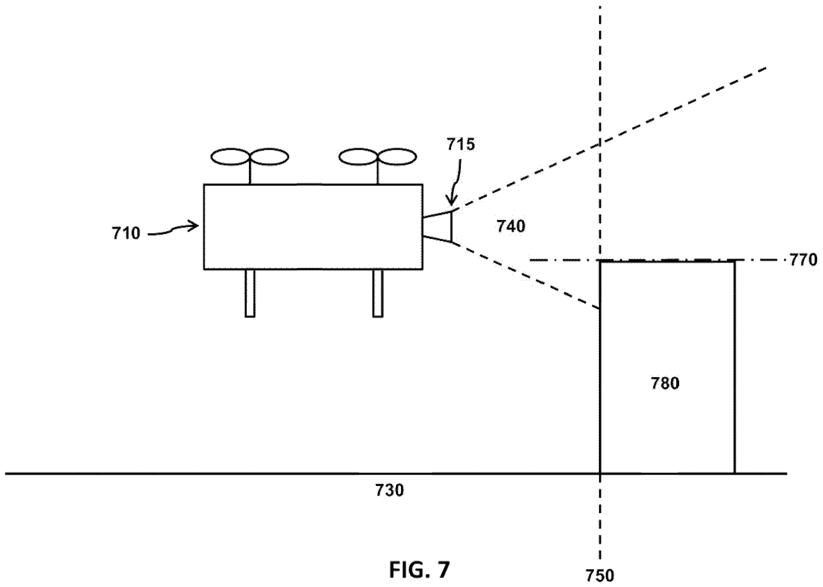

In **FIG.** 7, an object 780, such as a stretch of land, which extends from the reference level 730 at the point 750 also intersects with the detection range 740. Specifically, the top of the object 780, which is 770, is in the detection range. By analyzing the data generated by the sensor 715 corresponding to the detection range 740, the UAV can determine the distance from the top 770 to the reference level, which would be the actual value for the surface height at the point 750. Therefore, the UAV can store in the elevation map that distance as an estimate of the surface height at the point 750 and a category indicating that the estimated value is the actual value for the surface height ("green category" hereinafter). This category generally signals the presence of an object at the estimated surface height but not at higher heights (within a corresponding detection range), and thus a medium risk of crashing into an obstacle near the estimated surface height.

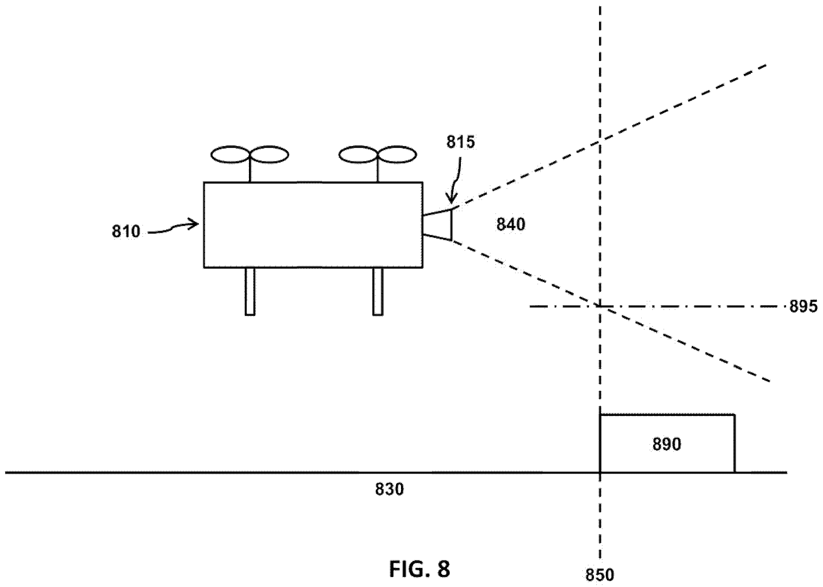

In **FIG. 8****,** an object 890 that extends from the reference level 830 at the point 850 does not intersect with the detection range 840. By analyzing the data generated by the sensor 815 corresponding to the detection range 840, the UAV can conclude that if there is any object that extends from the reference level 830 at the point 850, such as the object 890, the top of the object is not higher than the bottom of the detection range 895, or in other words, the distance from the bottom of the detection range 895 is a maximum value for the surface height at the point 850. Therefore, the UAV can store in the elevation map that distance as an estimate of the surface height at the point 850 and a category indicating that the estimated value is an upper threshold or a maximum value for the surface height ("blue category" hereinafter). This category generally signals the absence of an object at the estimated surface height (although it may be present at a lower height or a higher height beyond a corresponding detection range), and thus a small risk of crashing into an obstacle near the estimated surface height.

In some embodiments, the UAV may have no surface height information for certain 2D coordinates with respect to the reference level, because the points above these 2D coordinates are outside the detection range of this UAV, other UAVs that communicate with the central server, or any other UAV which deposits relevant data in databases accessible to the UAVs that communicate with the central server. However, the lack of information does not necessarily mean the absence of obstacles. For completeness, for a point for which the UAV has no surface height information, the UAV can store in the elevation map a default value, a maximum value, or some other value as an estimate of the surface height and a category indicating that the estimate is of no use ("the blank category" hereinafter). In this manner, an elevation map is relatively easy to build and maintain and can be used to avoid obstacles or other undesirable locations in determining flight paths.

In some embodiments, when the sensor 815 is a camera that generates a 2D image for the detection range, existing image analysis technique can be used to identify the boundary of an object and thus determine whether and where the top of the object is in the detection range. When the sensor 815 is a laser, ultrasound, or other device that determines a distance or depth profile for the detection range, the profile can be used to easily determine whether and where the top of an object is in the detection range. The analysis of the sensor data can also determine the distance of a detected object from the sensor and thus the exact coordinate of the point 850 based on the properties and location of the sensor. For a small UAV or a limited detection range, the point 850 can be considered to coincide with the point 818 or the point 816.

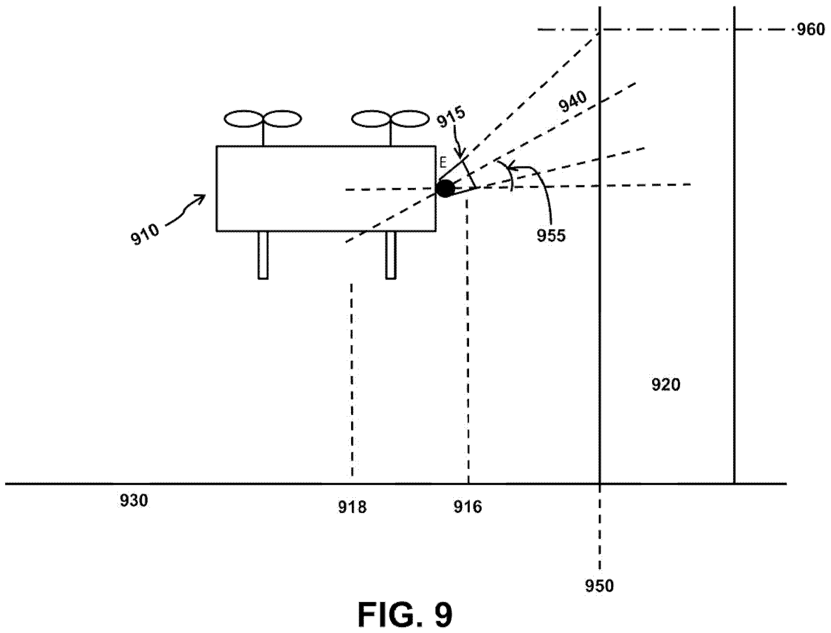

In **FIG. 9****,** an object 920 that extends from a reference level 930 at the point 950 intersects the detection range 940. However, only a mid-portion of the object 920 is in the detection range, while the top of the object 920 is not. By analyzing the data generated by the sensor 915 corresponding to the detection range 940, the UAV can conclude that the top of the object 920 is higher than the top of the detection range 960, or in other words, the distance from top of the detection range 960 to the reference level is a minimum value for the surface height at the point 950. In some embodiments, the sensor 915 is carried by a carrier (e.g., a 1-axis, 2-axis, or 3-axis gimbal, not shown in Fig. 9) and the carrier is mounted on the UAV. The carrier can be configured to control the detection range 940 by adjusting a spatial disposition (e.g., orientation, position) of the sensor 915. For example, the carrier can control a pitch angle 955 of the sensor 915 relative to the UAV 910. In some embodiments, the sensor data acquired by the sensor 915 may be represented relative to a respective coordinate system (e.g., based on the position and orientation of the sensor 915 relative to the vehicle body of the UAV 910). Accordingly, the sensor data can be converted into a single coordinate system using sensor fusion in order to facilitate the determination of the surface height. For example, the sensor data representative relative to a local coordinate system may be converted into a global coordinate system, or vice-versa. The coordinate system conversion can be accomplished based on one or more parameters associated with the sensor 915 and/or the UAV 910 at a time when the sensor data is acquired. In some embodiments, the one or more parameters may comprise a first set of parameters associated with spatial relationships (e.g., relative position, orientation, or attitude) between the sensor 915 and the UAV 910. For example, when the sensor 915 is mounted on the UAV 910 via a gimbal, the spatial relationships may comprise a relative pitch, yaw, and roll angle between the sensor 915 and the vehicle body of the UAV 910. In some embodiments, the one or more parameters may further comprise a second set of parameters associated with the UAV 910, such as a position, flying altitude, orientation, or attitude of the UAV 910 relative to the global coordinate system. The conversion calculations for transforming the sensor data into a single coordinate system can then be determined based on the determined one or more parameters. Based on the converted sensor data, a surface height for a 2D coordinate in the global coordinate system can be determined. In some cases for a single 2D coordinate in the global coordinate system, there may be more than one corresponding sensor data (pixel), such as a vertical edge of a building. The surface height of the 2D coordinate can be calculated by (1) choosing the biggest surface height value for the 2D coordinate or a plurality of 2D coordinates within a unit area (e.g., a 1m x 1m square) including the 2D coordinate, (2) averaging surface heights for the 2D coordinate or a plurality of 2D coordinates within a unit area (e.g., a 1m x 1m square) including the 2D coordinate, for example.

In some embodiments, the UAV sets the frequency of data generation for the sensor, which can determine the frequency of data analysis. The frequency of data generation can depend on the flying speed or the flying altitude of the UAV, the characteristics of the flying regions, or other factors. For example, a larger flying speed may require a larger data generation frequency, and a larger flying altitude where obstacles may be less likely to be present may require a smaller data generation frequency. Similarly, a region that is known for containing many obstacles may require a smaller data generation frequency. On the other hand, sensor data can be analyzed as soon as it becomes available, as soon as it reaches a predetermined size, or according to a predetermined schedule. As one example, with a limited storage capacity, a UAV may need to frequently analyze the sensor data, send the resulting elevation data to the central server, and delete the analyzed sensor data. As another example, in response to a request from the central server for elevation data before a certain deadline, the UAV would want to complete analyzing available sensor data as soon as possible.

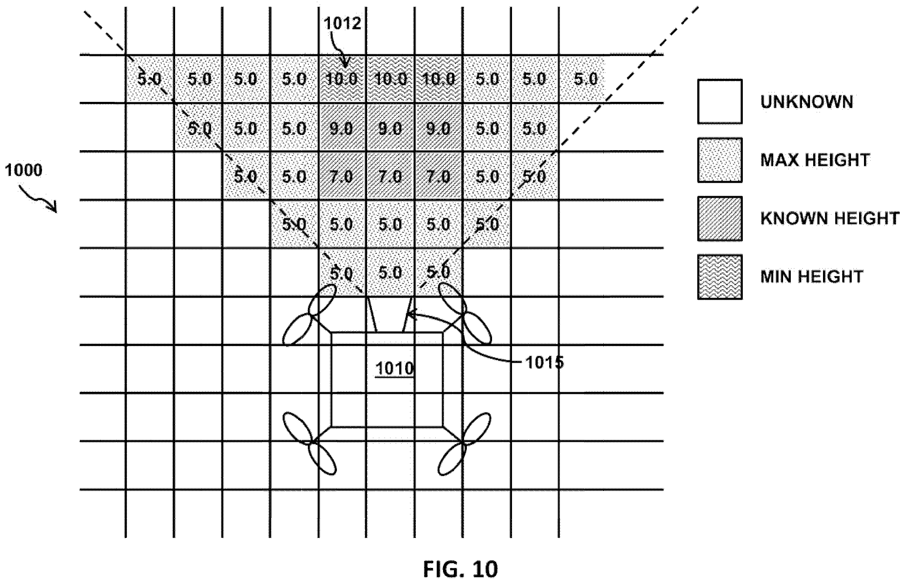

**FIG. 10** illustrates how a UAV builds an elevation map from sensor data. The detection range of a sensor 1015 onboard a UAV 1010 can have a cone shape or another shape, which the UAV can divide into unit areas, including the unit area 1012. From analyzing sensor data, the UAV can compute an estimate of the surface height for a 2D coordinate corresponding to each of the unit areas, such as 10.0 for the unit area 1012, and a category associated with the estimate of the surface height, such as a maximum value for the surface height. In this example, the detection range of the sensor 1015 may allow the determination of only estimated surface heights between 5.0 and 10.0, which are not necessarily actual surface heights and do not exclude the possibility that obstacles exist below 5.0. Initially, there may be no elevation data or elevation data associated with the blank category in the local map corresponding to points outside the detection range. In addition, data in the elevation map can be consolidated by merging data for several 2D points. For example, the surface height for one 2D coordinate can be equal to a maximum surface height for a plurality of neighboring coordinates corresponding to a predetermined distance to the 2D coordinate.

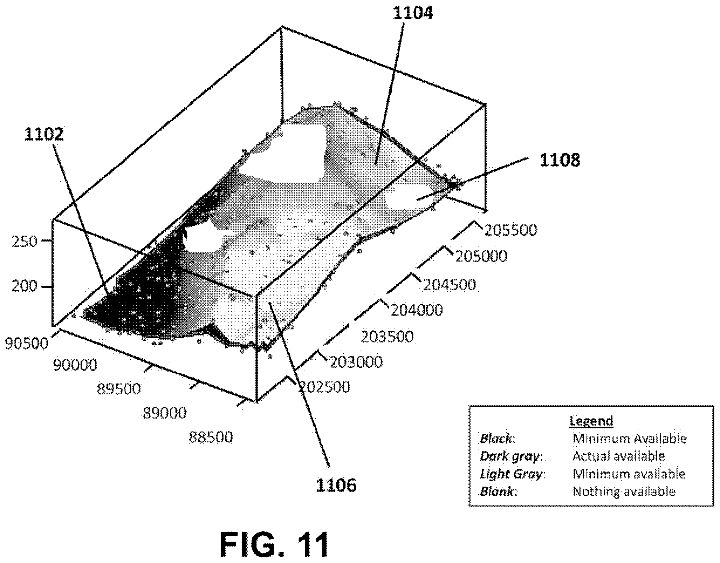

**FIG. 11** illustrates an example 3D representation of an elevation map. The landscape shows the estimated heights for the 2D coordinates on the ground, while the coloring of the landscape shows the categories for the 2D coordinates. The 2D coordinate for the point 1102 has a red category, meaning that the height shown at the point 1102 is the minimum of an actual surface height at the 2D coordinate. Similarly, the 2D coordinate for the dark gray point 1104 has a green category, the 2D coordinate for the light gray point 1106 has a blue category, and the 2D coordinate for the white point 608 has a blank category. Such a visual representation can be useful to a user controlling the UAV.

In some embodiments, an elevation map also includes one or more confidence indicators or other indicators of the quality of the estimate. These confidence indicators can be based on qualitative measures but would be quantitative in nature and easily incorporated into cost functions in the determination of flight paths. These confidence indicators can supplement, incorporate, or replace the category information, so that 2D coordinates associated with the same category may be associated with different confidence indicators. Specifically, the blank, red, blue, and green categories generally characterize a nature of uncertainty for a surface height, with the green category associated with the least amount of uncertainty regarding the height of an obstacle. However, as discussed above, the green, blue, and red categories are associated with increasing risks of crashing into an object at the estimated height and may in that order be further converted to increasingly smaller confidence indicators indicating larger degrees of obstruction, danger, or required caution for flying at the estimated height. The confidence indicators can also be related to a condition of a sensor (e.g., capabilities, quality), environmental conditions when sensor data was generated, features related to the UAV, etc. As one example, a camera having a higher resolution may generate images that have more details and thus capture views more accurately, which can then lead to a more accurate estimate of a surface height. As another example, a storm may mean low visibility for a sensor and thus dark or blurry images, which can then lead to a less accurate estimate of a surface height. As yet another example, a weaker GPS signals strength may mean a weaker determination of the location of the UAV and the corresponding 2D coordinate. As yet another example, a UAV with a stronger engine or a better operator may mean higher stability for the sensor and thus sharper images, which can then lead to a more accurate estimate of the surface height. More generally, the UAVs can be ranked based on different features that may affect the quality of sensor data, such as the engine or processor characteristics, the operators, the flight missions, the flying regions, the flying altitudes, the flying times, etc. The confidence indicators can then be based on such a ranking.

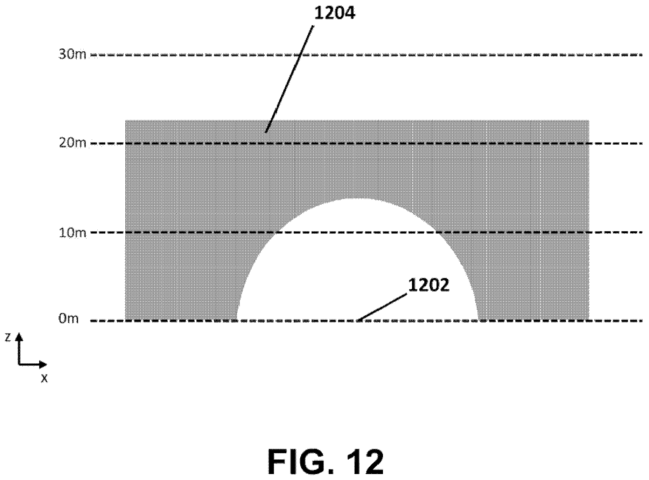

In some embodiments, the elevation map includes, in addition to an estimated surface height for each 2D coordinate and a category indicating the nature of uncertainty or a confidence indicator associated with the estimated height, a flying altitude of an UAV when a sensor onboard the UAV generated data that led to the estimated surface height. This information can be especially useful for 2D coordinates having multiple surface heights due to existence of objects that do not extend all the way from the ground. **FIG. 12** illustrates a scenario where multiple surface heights exist for a 2D coordinate. The estimated surface height and the nature of uncertainty determined for the point 1202 under the bridge 1204 could be different depending on a height range in which a sensor that acquired data leading to the estimated surface height might be located or in which the UAV where the sensor was installed was flying, at the time of data acquisition. For example, a UAV might determine that the surface height for the point 1202 within a height range between 0m and 10m is equal to a ground level or a sea level, thus assigning the estimated height to the green category, while a UAV might determine that the surface for the point 1202 within a height range between 10m and 20m is at least 20m, thus assigning the estimated height to the red category. Therefore, given an elevation map that includes a height range associated with an estimated height for a 2D coordinate, a UAV can compare the height range with its current flying altitude to better determine its flight paths, possibly taking advantage of additional flying space, such as the area under a bridge. In some embodiments, a UAV stores additional information for a 2D coordinate in the elevation map for record keeping or conflict resolution purposes, as discussed below. The additional information can include a timestamp for when a sensor of the UAV generated data that led to an estimate of a surface height at the 2D coordinate, as data freshness may play a role in prioritizing different data for the same 2D coordinate. The direction of the sensor when it generated data can be included particularly for maneuvering purposes. Furthermore, the sensor data may reveal the type of obstacles, and such information can also be incorporated into the elevation maps. For example, a camera may show a graphical representation of the obstacle, while an ultrasound sensor may show the light reflect/refraction profiles indicated of the surface material of the obstacle. UAV can also attach an identifier of the UAV to all the 2D coordinates in the elevation map, as the identity of a UAV may also play a role in prioritizing different data for the same 2D coordinate, as discussed above.

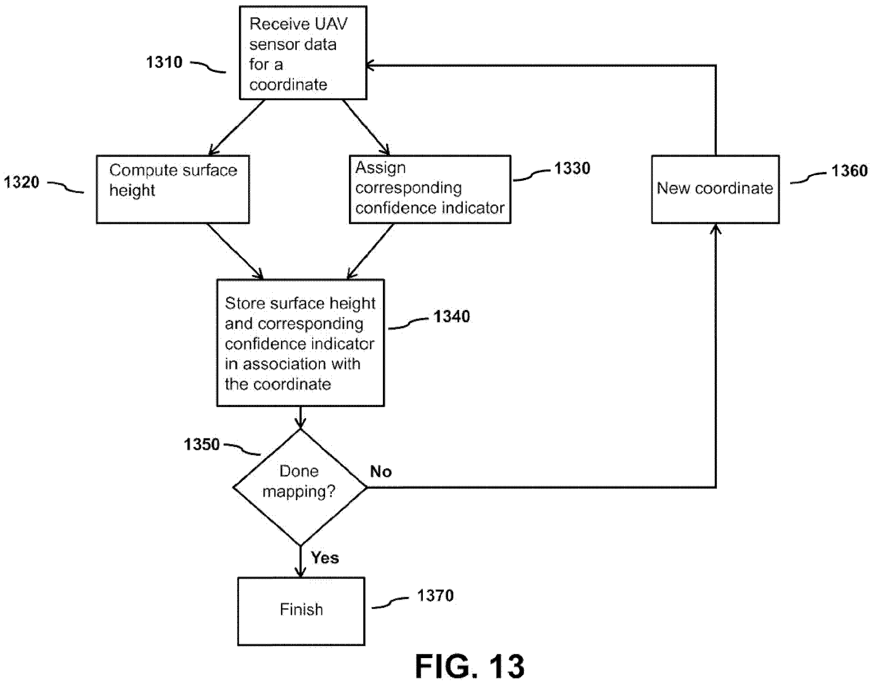

FIG. 13 illustrates an example process performed by the UAV of building an elevation map. In step 1310, the UAV receives data from a sensor. The UAV identifies a set of 2D coordinates corresponding to the detection range of the sensor with respect to a reference level. For example, the UAV can determine the current GPS coordinate of the UAV and thus the points in the detection range and projects the GPS coordinates of those points to the ground level. For each of the identified 2D coordinate, in steps 1320 and 1330, the UAV computes a surface height and assigns one or more confidence indicators corresponding to the surface height for the 2D coordinate based on the received sensor data. The confidence indicators indicate a relationship between the computed surface height and an actual surface height for the 2D coordinate. In some embodiments, the confidence indicators may be represented as categories (e.g., red, green, blue, or blank) associated with the surface height. In step 1340, the UAV stores the estimated surface height together with the one or more confidence indicators, a timestamp for when the sensor data was generated, or other relevant information for the 2D coordinate in the elevation map. In steps 1350 and 1360, the UAV returns to the process of generating elevation data for each of the identified 2D coordinates until the end in step 1370, where the end could be the end of flight, when a mapping function is turned off, etc. The UAV can repeat this process based on a required frequency of data analysis.

In some embodiments, the global elevation map expands over time, covering more and more regions within a given air space. Depending on the total area to be covered by elevation maps and the size of each unit area (e.g. one cubic meter), in the elevation maps, even if an elevation map for 2D coordinates may generally be simpler than a map for 3D coordinates, the sizes of these elevation maps may grow very quickly. Therefore, dynamic allocation of memory space is generally preferred for storage of these elevation maps. For example, the unit areas could be grouped into blocks. When data in an elevation map is available for a specific block, a contiguous storage region can be allocated to each block in which data for individual unit areas would be stored consecutively. The storage regions can then be maintained in a linked list, a tree, or another data structure for efficient access. In addition, appropriate selection of the block size or the number of unit areas in a block can enable efficient indexing of and search for a storage region corresponding to a block in the data structure. For example, when the block size is 512 or a certain power of 2, the indexing can be performed directly by hardware via bitwise operations. These approaches reduce memory requirements and increase processing speed.

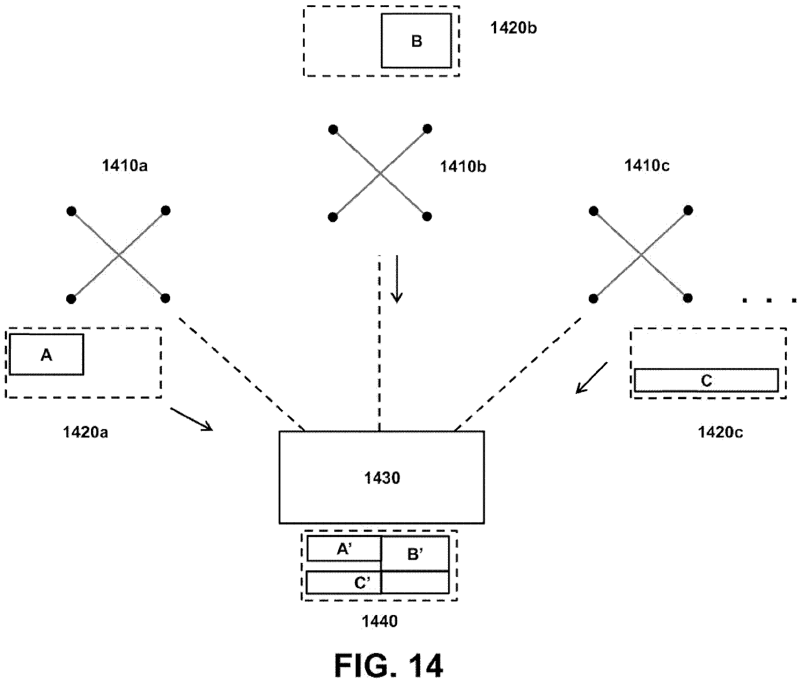

**FIG. 14** illustrates how UAVs may share data to create global maps. One or more UAVs 1410a, 1410b, 1410c may collect data useful for making a local map of the environment around the respective UAVs. As described in greater detail elsewhere herein, each of the UAVs may carry one or more sensors that can be used to collect environmental data. The environmental data may include height data, as described further elsewhere herein. The UAVs may generate local elevation maps 1420a, 1420b, and 1420c for their respective regions. The UAV may be able to create and access the elevation data in an autonomous or semi-autonomous manner to avoid collisions with objects.

For example, a first UAV may be at a first region A and create the map for region A, while a second UAV may be at a second region B and create the map for region B. Each UAV can create use its own local maps while on the fly, or it can be continuously transmitting data in its own local maps to the central server, periodically, or in response to certain events. The UAV can also just send raw sensor data to the central server or a local processor, which would then take on the role of converting sensor data to elevation data. Different region sizes and/or shapes may depend on the UAV's flight paths. The UAV may have different sensors having different ranges and/or sensitivity that may affect the scope and nature of the collected data. Upon receiving data in the local elevation maps 1420a, 1420b, 1420c, the central server 1430 can consolidate and reconcile them and store the results, which may comprise variants of the received data, into global maps 1440.

In some embodiments, the 2D coordinate systems used for local elevation maps are different from one another or from the one used for global elevation maps. For example, the 2D coordinate system chosen by a UAV can be with respect to the takeoff point of the UAV. Generally, a local elevation map includes elevation data created by and stored on a single UAV, possible from different flights or over different time periods, while a global map includes elevation data created by multiple UAVs.

In some embodiments, as an UAV builds a local elevation map, it may be sent to a central server so that other UAVs can utilize the data in the local elevation map. The central server can also send a request to one or more UAVs for data in their local maps based on a predetermined schedule or in response to certain events. For example, when the data received from a UAV indicates a sudden emergence of an obstacle in a particular location, the central server can send a request to other UAVs currently flying in regions surrounding the particular location in order to obtain a bigger picture regarding the obstacle or the particular location. When different local elevation maps are associated with different 2D regions or different flying altitudes, the central server can store all the data in these local elevation maps into one or more global elevation maps. For example, the UAV can store separate global elevation maps for different 2D regions, different flying altitudes, etc. Otherwise, the central server can resolve conflicts or inconsistencies among different local maps in various ways.

In some embodiments, for data associated with the same flying altitude, the central server resolves conflicts or inconsistencies among different local maps by considering one or more different factors. For a given 2D coordinate, the conflicts could be between different estimated heights only. The central server can choose the largest or an aggregate of the different estimate heights. Specifically, for a single 2D coordinate, there may be more than one corresponding sensor data (pixel), such as a vertical edge of a building. Therefore, there are two approaches in calculating the surface height: (1) choosing the biggest surface height value for the 2D coordinate or a plurality of 2D coordinates within a unit area (e.g., a 1m x 1m square) including the 2D coordinate, or (2) averaging surface heights for the 2D coordinate or a plurality of 2D coordinates within a unit area (e.g., a 1m x 1m square) including the 2D coordinate. When the different estimated heights are associated with the red or green category, a smaller estimated surface height can be preferred, and when they are associated with the green or blue category, a larger estimated surface can be preferred to be on the safe side. For more complex conflicts, the central server can prioritize different elevation data in different ways. The conflicts could also be between different categories or confidence indicators only. The central server can choose to keep a category associated with more risk of crashing into an obstacle in the local map to be on the safe side. However, the central server can also choose to keep a larger confidence indicator to serve as a better quality indicator of the common estimated height. The central server can also store a value larger than two comparable confidence indicators which can be considered to confirm each other.

In some embodiments, the central server can resolve more complex conflicts using more advanced approaches. Building construction or destruction projects or climate shifts may change the landscape from time to time. Therefore, the central server may prefer estimated surface heights corresponding to more recent times. Since the confidence indicators generally indicate the quality of the estimates, the central server may prefer estimated surface heights associated with higher confidence indicators. The central server can also correlate the estimated surface height with the indicated type of obstacle. For example, when an estimate of surface height corresponds to a build of 1,000 floors, the indication that the obstacle is part of a building may be less reliable. In addition, the central server may choose to store into the global elevation map estimated surface heights associated with the green category to eliminate unnecessary uncertainty, or larger estimated surface heights to be on the safe side, especially when these estimated heights are associated with the green or red categories.

In some embodiments, the central server handles data associated with different flying altitudes in different ways. As mentioned previously, all of such data can be kept and stored into different global elevation maps corresponding to different flying altitudes. This approach eliminates the need to reconcile inconsistencies, incorporates more information, and affords a UAV more choices in determining flight paths. On the other hand, the central server may maintain a single global map with one estimated height for each 2D coordinate for more efficient utilization of computing resources. The central server may choose to store into the global map data associated with larger flying altitudes to be on the safe side, especially when the estimated heights are associated with the green or red categories. The central server may also choose instead data associated with smaller flying altitudes to allow a UAV to fly at a lower, easier altitude, especially when the estimated heights are associated with the blue categories.

In some embodiments, the central server transmits data in a global map to specific UAVs or groups of UAVs. The central server can transmit data according to a predetermined schedule, such as periodically, when the amount of update to the global elevation map within a period of time exceeds a threshold, when the number of UAVs from which data is received within a period of time exceeds a threshold, etc. The central server can also transmit data on a need basis. For example, when a recent update of the global elevation map indicates an emergency, such as a sudden emergency of an obstacle, the central server may send such updates to UAVs flying near the obstacle. The central server can also send data to a UAV in response to a request from the UAV.

In some embodiments, the central server cleans up a global elevation map from time to time. For example, it may remove entries associated with very old timestamps, or move all data produced by a UAV when a malfunction has been detected for the sensor onboard the UAV. The UAV can log all the updates to the global elevation map or incrementally store all the changes from the global elevation map submitted by or on behalf of the UAVs. Furthermore, the central server can perform various analyses of the data in the global elevation maps. For example, the central server can identify 2D regions having frequent changes of surface heights, 2D regions having increasing higher surface heights, 2D regions that remain relatively unexplored, etc. The central server can also provide an API that allows other systems to analyze the data in the global elevation maps. In addition, the central server can provide a user interface, such as a GUI that allows a user to examine and visualize the data in the global elevation maps and the related analytical results derived from the global elevation maps.

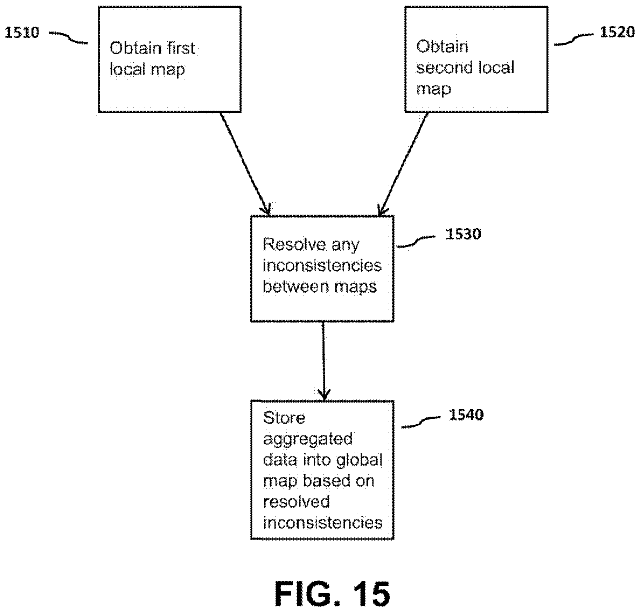

**FIG. 15** illustrates an example process performed by the central server of managing a global elevation map. In step 1510 and 1520, the central server receives local elevation maps stored on two UAVs, at the same time or different times. For example, the central server may receive, at a first time T1, a first local elevation map from a first UAV, and store the first local elevation map as a portion of the global elevation map. After a period of time the central server may receive, at a second time T2, a second local elevation map from a second UAV. The central server can be configured to process data (e.g., estimated surface heights, confidence indicators or categories associated with the estimated surface heights) of the two local elevation map to resolve any conflicts or inconsistencies to update the global elevation map. The local elevation maps can correspond to distinct or overlapping regions. In step 1530, the central server examines the local elevation maps and resolves any inconsistencies or conflicts between the local elevation maps. For example, for each 2D coordinate of the overlapping regions, the central server can identify differences with respect to the data (e.g., estimated surface heights, confidence indicators or categories associated with the estimated surface heights) associated with the 2D coordinate between the local elevation maps. When there is a difference, the central server may determine resolution data based on the confidence indicators or categories associated with the estimated surface heights. Typically an estimated surface height with a higher confidence indicator is selected as the resolution data. In step 1540, the central server stores the resolution data into the global elevation map based on the conflict resolution, thereby updating the global elevation map. This process can be extended to cover the case where only local elevation maps from an UAV need to be incorporated into the global elevation maps and the case where local elevation maps from more than two UAVs need to be incorporated into the global elevation maps. Generally, any portion of a local elevation map from a UAV that does not conflict with the any local elevation map stored on another UAV and any global elevation map can be directly stored into the global elevation maps. When portions of local elevation maps stored on two or more UAVs conflict with one another but not with the global elevation maps, the result of conflict resolution can be stored into the global elevation maps. Any conflict of a local map with any global elevation map needs to be resolved, and the result of conflict resolution can be stored into the global elevation maps. The conflicts among the local elevation maps can be resolved before the conflicts with the global elevation maps, or they can be resolved at the same time. This process can be performed continuously whenever local elevation maps are received.

In some embodiments, a UAV transmits data in a local elevation map to the central server. The UAV can determine when to transmit data to the central server similar to how the central server determines when to transmit data to the UAVs, as discussed above. As one example, when the main purpose of a UAV is to gather data for elevation maps, the UAV may be gathering data at a fast pace and may want to offload local elevation maps to the central server periodically or frequently so that it can store all the gathered data in its local memory. As another example, when the UAV is flying through an area where the surface height has been known to change continuously, the UAV may want to transmit local elevation maps to the central server as soon as possible to keep the other UAVs updated.

In some embodiments, a UAV receives data from the central server. The local maps supplemented by data in global elevation maps can assist the UAV with navigation even when control signals from a remote control are weak or lost. The data from the central server may be from a periodic distribution of the data in a global elevation map, an emergent notification, or recent updates to a global elevation map, or in response to a request from the UAV, as discussed above. The UAV can send a request to the central server when or right before it starts new flight or during current flight. The request could be for all regions along a planned flight path or select regions, such as those above 2D regions for which no information is available in any local elevation map stored by the UAV or those above 2D regions where the surface heights have been known to change continuously.

In some embodiments, when the UAV does not have a sensor and thus does not maintain a local elevation map, when the UAV has not started building a local elevation map, or when the UAV currently has an empty local elevation map as a result of previous cleanup, or in other similar situations, the UAV can add all the data received from the central server into a new or an existing local elevation map subject to its storage capacity. When the data received from the central server exceeds its storage capacity, the UAV may choose to store portions of that data that are associated with more recent timestamps or larger confidence indicators, that cover regions closer to its current location, that are associated with flying altitudes closer to or larger than its currently flying altitude, that are associated with the red or green categories, and so on.

In some embodiments, the data received from the central server conflicts with the data in a local elevation map stored by a UAV. Since the data in a global elevation map is generally the result of careful conflict resolution, the UAV can choose to let the global elevation map take precedence and thus override the data in the local elevation map with the data received from the central server. Alternately, the UAV can resolve conflicts between the data received from the central server and the data in the local elevation map similar to how the central server resolves inconsistencies between data received from different UAVs, as discussed above, and updates the local elevation map as necessary. Furthermore, the UAV can receive new sensor data that leads to map data that conflicts with what is in the local elevation map. For example, when the UAV flies at different altitudes, the sensor data acquired corresponding to the same 2D coordinate in the local elevation map may be different. The UAV can resolve conflicts between the new map data and the data in the local elevation map similar to how the central server resolves inconsistencies between data received from different UAVs or separately store data corresponding to different flying heights, as discussed above.

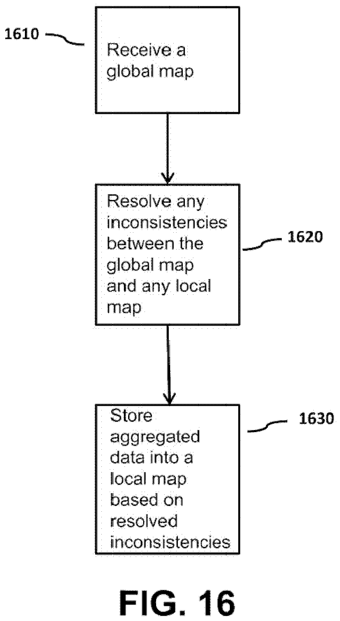

**FIG. 16** illustrates an example process performed by a UAV of managing local elevation maps. In step 1610, the UAV receives one or more global elevation maps from the central server. The global elevation maps and the local elevation maps may comprise distinct or overlapping regions. In step 1620, the UAV examines the global elevation maps with respect to any local elevation maps stored onboard and resolve any inconsistencies or conflicts between the global local elevation maps and the local elevation maps. For example, for each 2D coordinate of the overlapping regions, the UAV can identify differences with respect to the data (e.g., estimated surface heights, confidence indicators or categories associated with the estimated surface heights) associated with the 2D coordinate between the global elevation maps and the local elevation maps. When there is a difference, the UAV determines resolution data based on the confidence indicators or categories associated with the estimated surface heights. Typically an estimated surface height with a higher confidence indicator is selected as the resolution data. In step 1630, the UAV stores the resolution data into the local elevation maps based on the conflict resolution, thereby managing the local elevation maps. Any portion of a global elevation map that does not conflict with any local elevation map and the result of conflict resolution can be stored into the local elevation maps. This process can be performed continuously whenever global elevation maps are received from the central server.

In some embodiments, a UAV determines its flight paths based on the local elevation maps. For example, the UAV can choose to stay away from regions containing many points above 2D coordinates that are associated with the red category in a local elevation map. Further details are described in the co-pending application entitled "Flight Path Determination" filed on November 14, 2016.

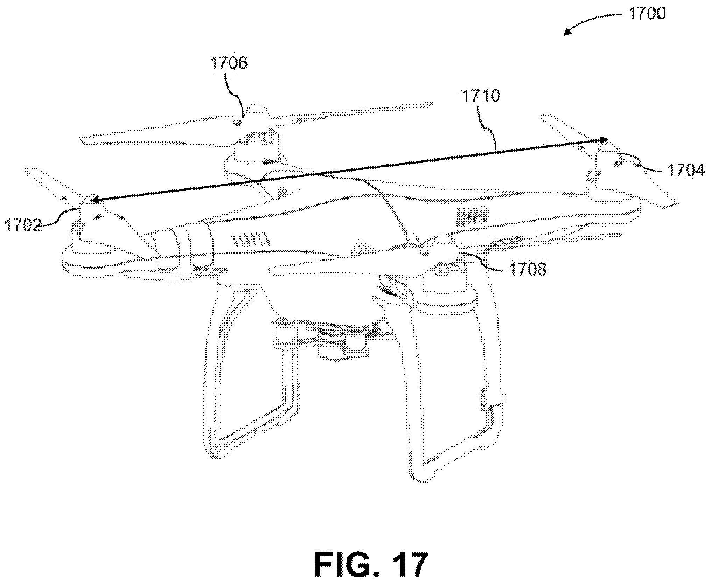

**FIG. 17** illustrates an unmanned aerial vehicle (UAV) 1700, in accordance with embodiments of the present invention. The UAV may be an example of a movable object as described herein. The UAV 800 can include a propulsion system having four rotors 1702, 1704, 1706, and 1708. Any number of rotors may be provided (e.g., one, two, three, four, five, six, or more). The rotors can be embodiments of the self-tightening rotors described elsewhere herein. The rotors, rotor assemblies, or other propulsion systems of the unmanned aerial vehicle may enable the unmanned aerial vehicle to hover/maintain position, change orientation, and/or change location. The distance between shafts of opposite rotors can be any suitable length 1710. For example, the length 1710 can be less than or equal to 2 m, or less than equal to 5 m. In some embodiments, the length 1710 can be within a range from 40 cm to 1 m, from 10 cm to 2 m, or from 5 cm to 5 m. Any description herein of a UAV may apply to a movable object, such as a movable object of a different type, and vice versa.

In some embodiments, the movable object can be configured to carry a load. The load can include one or more of passengers, cargo, equipment, instruments, and the like. The load can be provided within a housing. The housing may be separate from a housing of the movable object, or be part of a housing for a movable object. Alternatively, the load can be provided with a housing while the movable object does not have a housing. Alternatively, portions of the load or the entire load can be provided without a housing. The load can be rigidly fixed relative to the movable object. Optionally, the load can be movable relative to the movable object (e.g., translatable or rotatable relative to the movable object).

In some embodiments, the load includes a payload. The payload can be configured not to perform any operation or function. Alternatively, the payload can be a payload configured to perform an operation or function, also known as a functional payload. For example, the payload can include one or more sensors for surveying one or more targets. Any suitable sensor can be incorporated into the payload, such as an image capture device (e.g., a camera), an audio capture device (e.g., a parabolic microphone), an infrared imaging device, or an ultraviolet imaging device. The sensor can provide static sensing data (e.g., a photograph) or dynamic sensing data (e.g., a video). In some embodiments, the sensor provides sensing data for the target of the payload. Alternatively or in combination, the payload can include one or more emitters for providing signals to one or more targets. Any suitable emitter can be used, such as an illumination source or a sound source. In some embodiments, the payload includes one or more transceivers, such as for communication with a module remote from the movable object. Optionally, the payload can be configured to interact with the environment or a target. For example, the payload can include a tool, instrument, or mechanism capable of manipulating objects, such as a robotic arm.

Optionally, the load may include a carrier. The carrier can be provided for the payload and the payload can be coupled to the movable object via the carrier, either directly (e.g., directly contacting the movable object) or indirectly (e.g., not contacting the movable object). Conversely, the payload can be mounted on the movable object without requiring a carrier. The payload can be integrally formed with the carrier. Alternatively, the payload can be releasably coupled to the carrier. In some embodiments, the payload can include one or more payload elements, and one or more of the payload elements can be movable relative to the movable object and/or the carrier, as described above.

The carrier can be integrally formed with the movable object. Alternatively, the carrier can be releasably coupled to the movable object. The carrier can be coupled to the movable object directly or indirectly. The carrier can provide support to the payload (e.g., carry at least part of the weight of the payload). The carrier can include a suitable mounting structure (e.g., a gimbal platform) capable of stabilizing and/or directing the movement of the payload. In some embodiments, the carrier can be adapted to control the state of the payload (e.g., position and/or orientation) relative to the movable object. For example, the carrier can be configured to move relative to the movable object (e.g., with respect to one, two, or three degrees of translation and/or one, two, or three degrees of rotation) such that the payload maintains its position and/or orientation relative to a suitable reference frame regardless of the movement of the movable object. The reference frame can be a fixed reference frame (e.g., the surrounding environment). Alternatively, the reference frame can be a moving reference frame (e.g., the movable object, a payload target).

In some embodiments, the carrier can be configured to permit movement of the payload relative to the carrier and/or movable object. The movement can be a translation with respect to up to three degrees of freedom (e.g., along one, two, or three axes) or a rotation with respect to up to three degrees of freedom (e.g., about one, two, or three axes), or any suitable combination thereof.

In some instances, the carrier can include a carrier frame assembly and a carrier actuation assembly. The carrier frame assembly can provide structural support to the payload. The carrier frame assembly can include individual carrier frame components, some of which can be movable relative to one another. The carrier actuation assembly can include one or more actuators (e.g., motors) that actuate movement of the individual carrier frame components. The actuators can permit the movement of multiple carrier frame components simultaneously, or may be configured to permit the movement of a single carrier frame component at a time. The movement of the carrier frame components can produce a corresponding movement of the payload. For example, the carrier actuation assembly can actuate a rotation of one or more carrier frame components about one or more axes of rotation (e.g., roll axis, pitch axis, or yaw axis). The rotation of the one or more carrier frame components can cause a payload to rotate about one or more axes of rotation relative to the movable object. Alternatively or in combination, the carrier actuation assembly can actuate a translation of one or more carrier frame components along one or more axes of translation, and thereby produce a translation of the payload along one or more corresponding axes relative to the movable object.

In some embodiments, the movement of the movable object, carrier, and payload relative to a fixed reference frame (e.g., the surrounding environment) and/or to each other, can be controlled by a terminal. The terminal can be a remote control device at a location distant from the movable object, carrier, and/or payload. The terminal can be disposed on or affixed to a support platform. Alternatively, the terminal can be a handheld or wearable device. For example, the terminal can include a smartphone, tablet, laptop, computer, glasses, gloves, helmet, microphone, or suitable combinations thereof. The terminal can include a user interface, such as a keyboard, mouse, joystick, touchscreen, or display. Any suitable user input can be used to interact with the terminal, such as manually entered commands, voice control, gesture control, or position control (e.g., via a movement, location or tilt of the terminal).

The terminal can be used to control any suitable state of the movable object, carrier, and/or payload. For example, the terminal can be used to control the position and/or orientation of the movable object, carrier, and/or payload relative to a fixed reference from and/or to each other. In some embodiments, the terminal can be used to control individual elements of the movable object, carrier, and/or payload, such as the actuation assembly of the carrier, a sensor of the payload, or an emitter of the payload. The terminal can include a wireless communication device adapted to communicate with one or more of the movable object, carrier, or payload.

The terminal can include a suitable display unit for viewing information of the movable object, carrier, and/or payload. For example, the terminal can be configured to display information of the movable object, carrier, and/or payload with respect to position, translational velocity, translational acceleration, orientation, angular velocity, angular acceleration, or any suitable combinations thereof. In some embodiments, the terminal can display information provided by the payload, such as data provided by a functional payload (e.g., images recorded by a camera or other image capturing device).

Optionally, the same terminal may both control the movable object, carrier, and/or payload, or a state of the movable object, carrier and/or payload, as well as receive and/or display information from the movable object, carrier and/or payload. For example, a terminal may control the positioning of the payload relative to an environment, while displaying image data captured by the payload, or information about the position of the payload. Alternatively, different terminals may be used for different functions. For example, a first terminal may control movement or a state of the movable object, carrier, and/or payload while a second terminal may receive and/or display information from the movable object, carrier, and/or payload. For example, a first terminal may be used to control the positioning of the payload relative to an environment while a second terminal displays image data captured by the payload. Various communication modes may be utilized between a movable object and an integrated terminal that both controls the movable object and receives data, or between the movable object and multiple terminals that both control the movable object and receives data. For example, at least two different communication modes may be formed between the movable object and the terminal that both controls the movable object and receives data from the movable object.

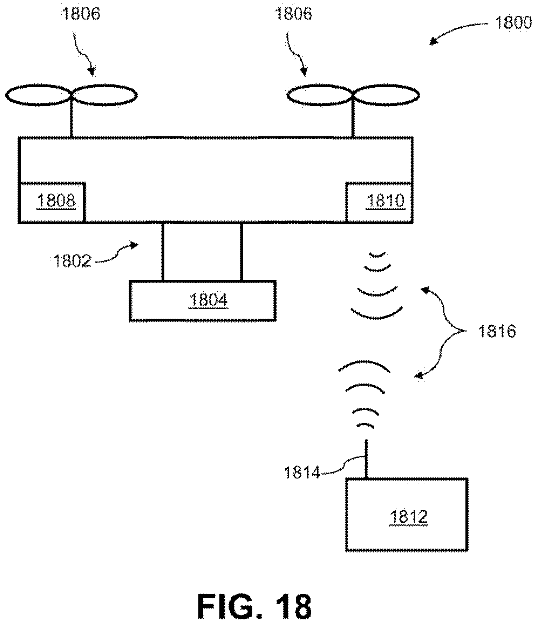

**FIG. 18** illustrates a movable object 1800 including a carrier 1802 and a payload 1804, in accordance with embodiments. Although the movable object 1800 is depicted as an aircraft, this depiction is not intended to be limiting, and any suitable type of movable object can be used, as previously described herein. One of skill in the art would appreciate that any of the embodiments described herein in the context of aircraft systems can be applied to any suitable movable object (e.g., a UAV). In some instances, the payload 1804 may be provided on the movable object 1400 without requiring the carrier 1802. The movable object 1800 may include propulsion mechanisms 1806, a sensing system 1808, and a communication system 1810.

The propulsion mechanisms 1806 can include one or more of rotors, propellers, blades, engines, motors, wheels, axles, magnets, or nozzles, as previously described. For example, the propulsion mechanisms 1806 may be self-tightening rotors, rotor assemblies, or other rotary propulsion units, as disclosed elsewhere herein. The movable object may have one or more, two or more, three or more, or four or more propulsion mechanisms. The propulsion mechanisms may all be of the same type. Alternatively, one or more propulsion mechanisms can be different types of propulsion mechanisms. The propulsion mechanisms 1806 can be mounted on the movable object 1800 using any suitable means, such as a support element (e.g., a drive shaft) as described elsewhere herein. The propulsion mechanisms 1806 can be mounted on any suitable portion of the movable object 1800, such on the top, bottom, front, back, sides, or suitable combinations thereof.

In some embodiments, the propulsion mechanisms 1806 can enable the movable object 1800 to take off vertically from a surface or land vertically on a surface without requiring any horizontal movement of the movable object 1800 (e.g., without traveling down a runway). Optionally, the propulsion mechanisms 1806 can be operable to permit the movable object 1800 to hover in the air at a specified position and/or orientation. One or more of the propulsion mechanisms 1800 may be controlled independently of the other propulsion mechanisms. Alternatively, the propulsion mechanisms 1800 can be configured to be controlled simultaneously. For example, the movable object 1800 can have multiple horizontally oriented rotors that can provide lift and/or thrust to the movable object. The multiple horizontally oriented rotors can be actuated to provide vertical takeoff, vertical landing, and hovering capabilities to the movable object 1800. In some embodiments, one or more of the horizontally oriented rotors may spin in a clockwise direction, while one or more of the horizontally rotors may spin in a counterclockwise direction. For example, the number of clockwise rotors may be equal to the number of counterclockwise rotors. The rotation rate of each of the horizontally oriented rotors can be varied independently in order to control the lift and/or thrust produced by each rotor, and thereby adjust the spatial disposition, velocity, and/or acceleration of the movable object 1800 (e.g., with respect to up to three degrees of translation and up to three degrees of rotation).

The sensing system 1808 can include one or more sensors that may sense the spatial disposition, velocity, and/or acceleration of the movable object 1800 (e.g., with respect to up to three degrees of translation and up to three degrees of rotation). The one or more sensors can include global positioning system (GPS) sensors, motion sensors, inertial sensors, proximity sensors, or image sensors. The sensing data provided by the sensing system 1808 can be used to control the spatial disposition, velocity, and/or orientation of the movable object 1800 (e.g., using a suitable processing unit and/or control module, as described below). Alternatively, the sensing system 1808 can be used to provide data regarding the environment surrounding the movable object, such as weather conditions, proximity to potential obstacles, location of geographical features, location of manmade structures, and the like.

The communication system 1810 enables communication with terminal 1812 having a communication system 1814 via wireless signals 1816. The communication systems 1810, 1814 may include any number of transmitters, receivers, and/or transceivers suitable for wireless communication. The communication may be one-way communication, such that data can be transmitted in only one direction. For example, one-way communication may involve only the movable object 1800 transmitting data to the terminal 1812, or vice-versa. The data may be transmitted from one or more transmitters of the communication system 1810 to one or more receivers of the communication system 1812, or vice-versa. Alternatively, the communication may be two-way communication, such that data can be transmitted in both directions between the movable object 1800 and the terminal 1812. The two-way communication can involve transmitting data from one or more transmitters of the communication system 1810 to one or more receivers of the communication system 1814, and vice-versa.

In some embodiments, the terminal 1812 can provide control data to one or more of the movable object 1800, carrier 1802, and payload 1804 and receive information from one or more of the movable object 1800, carrier 1802, and payload 1804 (e.g., position and/or motion information of the movable object, carrier or payload; data sensed by the payload such as image data captured by a payload camera). In some instances, control data from the terminal may include instructions for relative positions, movements, actuations, or controls of the movable object, carrier and/or payload. For example, the control data may result in a modification of the location and/or orientation of the movable object (e.g., via control of the propulsion mechanisms 1806), or a movement of the payload with respect to the movable object (e.g., via control of the carrier 1802). The control data from the terminal may result in control of the payload, such as control of the operation of a camera or other image capturing device (e.g., taking still or moving pictures, zooming in or out, turning on or off, switching imaging modes, change image resolution, changing focus, changing depth of field, changing exposure time, changing viewing angle or field of view). In some instances, the communications from the movable object, carrier and/or payload may include information from one or more sensors (e.g., of the sensing system 1808 or of the payload 1804). The communications may include sensed information from one or more different types of sensors (e.g., GPS sensors, motion sensors, inertial sensor, proximity sensors, or image sensors). Such information may pertain to the position (e.g., location, orientation), movement, or acceleration of the movable object, carrier and/or payload. Such information from a payload may include data captured by the payload or a sensed state of the payload. The control data provided transmitted by the terminal 1812 can be configured to control a state of one or more of the movable object 1400, carrier 1802, or payload 1804. Alternatively or in combination, the carrier 1402 and payload 1404 can also each include a communication module configured to communicate with terminal 1812, such that the terminal can communicate with and control each of the movable object 1800, carrier 1802, and payload 1804 independently.

In some embodiments, the movable object 1800 can be configured to communicate with another remote device in addition to the terminal 1812, or instead of the terminal 1812. The terminal 1812 may also be configured to communicate with another remote device as well as the movable object 1800. For example, the movable object 1800 and/or terminal 1812 may communicate with another movable object, or a carrier or payload of another movable object. When desired, the remote device may be a second terminal or other computing device (e.g., computer, laptop, tablet, smartphone, or other mobile device). The remote device can be configured to transmit data to the movable object 1800, receive data from the movable object 1800, transmit data to the terminal 1812, and/or receive data from the terminal 1812. Optionally, the remote device can be connected to the Internet or other telecommunications network, such that data received from the movable object 1800 and/or terminal 1812 can be uploaded to a website or server.

The systems, devices, and methods described herein can be applied to a wide variety of movable objects. As previously mentioned, any description herein of a UAV may apply to and be used for any movable object. A movable object of the present invention can be configured to move within any suitable environment, such as in air (e.g., a fixed-wing aircraft, a rotary-wing aircraft, or an aircraft having neither fixed wings nor rotary wings), in water (e.g., a ship or a submarine), on ground (e.g., a motor vehicle, such as a car, truck, bus, van, motorcycle; a movable structure or frame such as a stick, fishing pole; or a train), under the ground (e.g., a subway), in space (e.g., a spaceplane, a satellite, or a probe), or any combination of these environments. The movable object can be a vehicle, such as a vehicle described elsewhere herein. The movable object may be a self-propelled unmanned vehicle that does not require human input. In some embodiments, the movable object can be mounted on a living subject, such as a human or an animal. Suitable animals can include avians, canines, felines, equines, bovines, ovines, porcines, delphines, rodents, or insects. In some embodiments, the movable object may be carried.

The movable object may be capable of moving freely within the environment with respect to six degrees of freedom (e.g., three degrees of freedom in translation and three degrees of freedom in rotation). Alternatively, the movement of the movable object can be constrained with respect to one or more degrees of freedom, such as by a predetermined path, track, or orientation. The movement can be actuated by any suitable actuation mechanism, such as an engine or a motor. The actuation mechanism of the movable object can be powered by any suitable energy source, such as electrical energy, magnetic energy, solar energy, wind energy, gravitational energy, chemical energy, nuclear energy, or any suitable combination thereof. The movable object may be self-propelled via a propulsion system, as described elsewhere herein. The propulsion system may optionally run on an energy source, such as electrical energy, magnetic energy, solar energy, wind energy, gravitational energy, chemical energy, nuclear energy, or any suitable combination thereof. Alternatively, the movable object may be carried by a living being.

In some instances, the movable object can be a vehicle. Suitable vehicles may include water vehicles, aerial vehicles, space vehicles, or ground vehicles. For example, aerial vehicles may be fixed-wing aircraft (e.g., airplane, gliders), rotary-wing aircraft (e.g., helicopters, rotor craft), aircraft having both fixed wings and rotary wings, or aircraft having neither (e.g., blimps, hot air balloons). A vehicle can be self-propelled, such as self-propelled through the air, on or in water, in space, or on or under the ground. A self-propelled vehicle can utilize a propulsion system, such as a propulsion system including one or more engines, motors, wheels, axles, magnets, rotors, propellers, blades, nozzles, or any suitable combination thereof. In some instances, the propulsion system can be used to enable the movable object to take off from a surface, land on a surface, maintain its current position and/or orientation (e.g., hover), change orientation, and/or change position.

The movable object can be controlled remotely by a user or controlled locally by an occupant within or on the movable object. In some embodiments, the movable object is an unmanned movable object, such as a UAV. An unmanned movable object, such as a UAV, may not have an occupant onboard the movable object. The movable object can be controlled by a human or an autonomous control system (e.g., a computer control system), or any suitable combination thereof. The movable object can be an autonomous or semi-autonomous robot, such as a robot configured with an artificial intelligence.

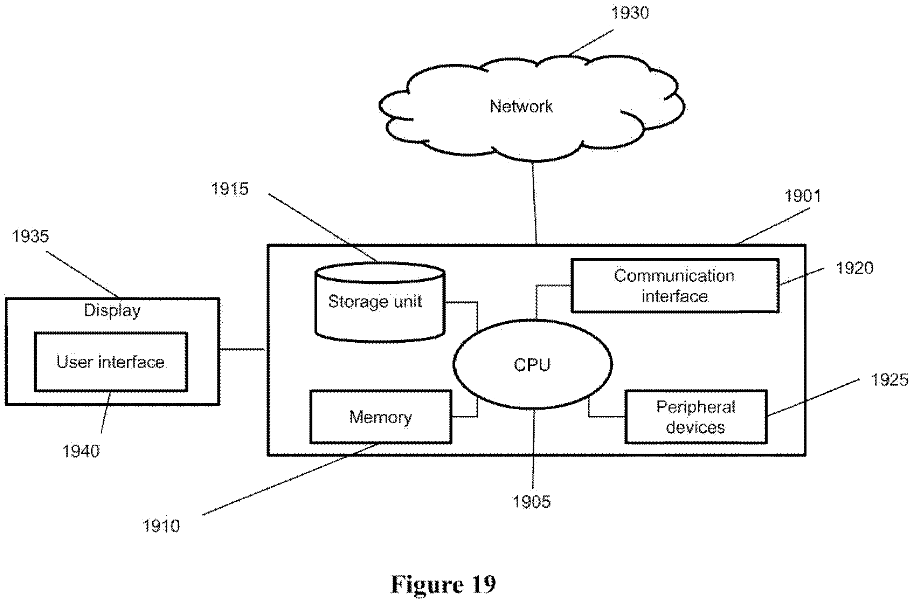

**FIG. 19** shows a computer system 1901 that can be configured to implement any computing system disclosed in the present application. The computer system 1901 can comprise a mobile phone, a tablet, a wearable device, a laptop computer, a desktop computer, a central server, etc.

The computer system 1901 includes a central processing unit (CPU, also "processor" and "computer processor" herein) 1905, which can be a single core or multi core processor, or a plurality of processors for parallel processing. The computer system 1901 also includes memory or memory location 1910 (e.g., random-access memory, read-only memory, flash memory), electronic storage unit 1915 (e.g., hard disk), communication interface 1920 (e.g., network adapter) for communicating with one or more other systems, and peripheral devices 1925 (optional), such as cache, other memory, data storage and/or electronic display adapters. The memory 1910, storage unit 1915, interface 1920 and peripheral devices 1925 are in communication with the CPU 1905 through a communication bus (solid lines), such as a motherboard. The storage unit 1915 can be a data storage unit (or data repository) for storing data. The computer system 1901 can be operatively coupled to a computer network ("network") 1930 with the aid of the communication interface 1920. The network 1930 can be the Internet, an internet and/or extranet, or an intranet and/or extranet that is in communication with the Internet. The network 1930 in some cases is a telecommunication and/or data network. The network 1930 can include one or more computer servers, which can enable distributed computing, such as cloud computing. The network 1930, in some cases with the aid of the computer system 1901, can implement a peer-to-peer network, which may enable devices coupled to the computer system 1901 to behave as a client or a server.

The CPU 1905 can execute a sequence of machine-readable instructions, which can be embodied in a program or software. The instructions may be stored in a memory location, such as the memory 1910. The instructions can be directed to the CPU 1905, which can subsequently program or otherwise configure the CPU 1905 to implement methods of the present disclosure. Examples of operations performed by the CPU 1905 can include fetch, decode, execute, and writeback.

The CPU 1905 can be part of a circuit, such as an integrated circuit. One or more other components of the system 1901 can be included in the circuit. In some cases, the circuit is an application specific integrated circuit (ASIC).

The storage unit 1915 can store files, such as drivers, libraries and saved programs. The storage unit 1915 can store user data, e.g., user preferences and user programs. The computer system 1901 in some cases can include one or more additional data storage units that are external to the computer system 1901, such as located on a remote server that is in communication with the computer system 1901 through an intranet or the Internet.

The computer system 1901 can communicate with one or more remote computer systems through the network 1930. For instance, the computer system 1901 can communicate with a remote computer system of a user. Examples of remote computer systems include personal computers, slate or tablet PC's, smart phones, personal digital assistants, and so on. The user can access the computer system 1901 via the network 1930.

Methods as described herein can be implemented by way of machine (e.g., computer processor) executable code stored on an electronic storage location of the computer system 1901, such as, for example, on the memory 1910 or electronic storage unit 1915. The machine executable or machine readable code can be provided in the form of software. During use, the code can be executed by the processor 1905. In some cases, the code can be retrieved from the storage unit 1915 and stored on the memory 1910 for ready access by the processor 1905. In some situations, the electronic storage unit 1915 can be precluded, and machine-executable instructions are stored on memory 1910.

The code can be pre-compiled and configured for use with a machine having a processer adapted to execute the code, or can be compiled during runtime. The code can be supplied in a programming language that can be selected to enable the code to execute in a pre-compiled or as-compiled fashion.

Aspects of the systems and methods provided herein, such as the computer system 1901, can be embodied in programming. Various aspects of the technology may be thought of as "products" or "articles of manufacture" typically in the form of machine (or processor) executable code and/or associated data that is carried on or embodied in a type of machine readable medium. Machine-executable code can be stored on an electronic storage unit, such as memory (e.g., read-only memory, random-access memory, flash memory) or a hard disk. "Storage" type media can include any or all of the tangible memory of the computers, processors or the like, or associated modules thereof, such as various semiconductor memories, tape drives, disk drives and the like, which may provide non-transitory storage at any time for the software programming. All or portions of the software may at times be communicated through the Internet or various other telecommunication networks. Such communications, for example, may enable loading of the software from one computer or processor into another, for example, from a management server or host computer into the computer platform of an application server. Thus, another type of media that may bear the software elements includes optical, electrical and electromagnetic waves, such as used across physical interfaces between local devices, through wired and optical landline networks and over various air-links. The physical elements that carry such waves, such as wired or wireless links, optical links or the like, also may be considered as media bearing the software. As used herein, unless restricted to non-transitory, tangible "storage" media, terms such as computer or machine "readable medium" refer to any medium that participates in providing instructions to a processor for execution.

Hence, a machine readable medium, such as computer-executable code, may take many forms, including but not limited to, a tangible storage medium, a carrier wave medium, or physical transmission medium. Non-volatile storage media include, for example, optical or magnetic disks, such as any of the storage devices in any computer(s) or the like, such as may be used to implement the databases, etc. shown in the drawings. Volatile storage media include dynamic memory, such as main memory of such a computer platform. Tangible transmission media include coaxial cables; copper wire and fiber optics, including the wires that comprise a bus within a computer system. Carrier-wave transmission media may take the form of electric or electromagnetic signals, or acoustic or light waves such as those generated during radio frequency (RF) and infrared (IR) data communications. Common forms of computer-readable media therefore include for example: a floppy disk, a flexible disk, hard disk, magnetic tape, any other magnetic medium, a CD-ROM, DVD or DVD-ROM, any other optical medium, punch cards paper tape, any other physical storage medium with patterns of holes, a RAM, a ROM, a PROM and EPROM, a FLASH-EPROM, any other memory chip or cartridge, a carrier wave transporting data or instructions, cables or links transporting such a carrier wave, or any other medium from which a computer may read programming code and/or data. Many of these forms of computer readable media may be involved in carrying one or more sequences of one or more instructions to a processor for execution.

The computer system 1901 can include or be in communication with an electronic display 1935 (optional) that comprises a user interface 1940 for providing, for example, a management interface. Examples of UI's include, without limitation, a graphical user interface (GUI) and web-based user interface.

Methods and systems of the present disclosure can be implemented by way of one or more algorithms. An algorithm can be implemented by way of software upon execution by the central processing unit 1905.

As used herein A and/or B encompasses one or more of A or B, and combinations thereof such as A and B.

While preferred embodiments of the present invention have been shown and described herein, it will be obvious to those skilled in the art that such embodiments are provided by way of example only. Numerous variations, changes, and substitutions will now occur to those skilled in the art without departing from the invention. It should be understood that various alternatives to the embodiments of the invention described herein may be employed in practicing the invention. It is intended that the following claims define the scope of the invention and that methods and structures within the scope of these claims and their equivalents be covered thereby.

Various embodiments have been described. The present invention may also (alternatively) be described by the below numbered aspects 1 to 70:
1. A method of building a two-dimensional (2D) elevation map, comprising:
   receiving sensor data regarding a 2D coordinate in a 2D coordinate system, wherein the sensor data is acquired by one or more sensors of an aerial vehicle;
   computing, based on the sensor data, a surface height for the 2D coordinate;
   assigning, based on the sensor data, a confidence indicator to the computed surface height; and
   storing the computed surface height and the assigned confidence indicator for the 2D coordinate in a database, thereby building the 2D elevation map.
2. The method of Aspect 1, wherein the surface height is computed relative to a reference level, and wherein the reference level is a ground level or a sea level.
3. The method of Aspect 1, wherein the one or more sensors include a camera, a radar, a lidar, or an ultrasonic sensor.
4. The method of Aspect 1, wherein the sensor data is acquired by the one or more sensors while the aerial vehicle is in operation.
5. The method of Aspect 1, wherein the sensor data is received according to a predetermined schedule.
6. The method of Aspect 1, wherein the one or more sensors are located in the front, sides, or back of the aerial vehicle.
7. The method of Aspect 1, further comprising:
   receiving one or more parameters associated with the one or more sensors of the aerial vehicle when the sensor data is acquired; and
   transforming, based on the one or more parameters, the received sensor data from a first coordinate system defined relative to the aerial vehicle into the 2D coordinate system.
8. The method of Aspect 7, wherein the one or more parameters are related to a spatial relationship between the one or more sensors of the aerial vehicle and the aerial vehicle.
9. The method of Aspect 1, wherein the confidence indicator indicates a relationship between the computed surface height and an actual surface height for the 2D coordinate.
10. The method of Aspect 1, wherein
   the confidence indicator is assigned a first value, when the computed surface height is a minimum of an actual surface height;
   the confidence indicator is assigned a second value, when the computed surface height is a maximum of an actual surface height; and
   the confidence indicator is assigned a third value, when the computed surface height is equal to an actual surface height.
11. The method of Aspect 1, wherein the confidence indicator is related to a feature related to the aerial.
12. The method of Aspect 1, wherein the computed surface height for the 2D coordinate is equal to a maximum surface height for a plurality of neighboring coordinates within a predetermined distance from the 2D coordinate.
13. The method of Aspect 1, further comprising transmitting, to a remote system over a communication network, the 2D coordinate, the computed surface height, and the assigned confidence indicator.
14. The method of Aspect 13, wherein the remote system is a cloud-computing platform, a server farm, or a parallel computing device.
15. The method of Aspect 13, wherein the communication network is the Internet, a cellular network, or a short-range wireless network.
16. The method of Aspect 13, further comprising
   detecting a difference between the computed surface height and a previously determined surface height for the 2D coordinate,
   wherein the transmitting is performed in response to the detecting.
17. The method of Aspect 13, wherein the transmitting is performed based on a predetermined schedule, when an amount of data to be transmitted exceeds a threshold, or in response to a request from the remote system.
18. The method of Aspect 1, further comprising:
   dividing a region comprising a plurality of 2D coordinates into a plurality of blocks;
   identifying a block to which each 2D coordinate of the plurality of 2D coordinates belong;
   wherein the storing includes saving the computed surface height and the assigned confidence indicator for the each 2D coordinate in a storage region allocated to the block.
19. The method of Aspect 18, further comprising:
   when no storage region in a local database has been allocated to the block, allocating a storage region in the local database to the block; and
   when a storage region in the local database has been allocated to the block, locating the storage region.
20. The method of Aspect 18, further comprising indexing storage regions allocated to blocks by block numbers and organizing the storage regions in a tree structure.
21. The method of Aspect 18, further comprising storing data for neighboring 2D coordinates that belong to a block sequentially in the storage region allocated to the block.
22. The method of Aspect 1, further comprising creating a flight path for the aerial vehicle based on the 2D elevation map.
23. The method of Aspect 1, wherein the receiving, the computing, the assigning, and the storing are performed with aid of one or more processors on-board the aerial vehicle.
24. The method of Aspect 1, wherein at least one of the receiving, the computing, the assigning, and the storing is performed with aid of one or more processors off-board the aerial vehicle.
25. A system for building a two-dimensional (2D) elevation map, comprising:
   at least one memory; and
   at least one processor connected with the at least one memory and configured to perform:
      receiving sensor data regarding a 2D coordinate in a 2D coordinate system, wherein the sensor data is acquired by one or more sensors of an aerial vehicle;
      computing, based on the sensor data, a surface height for the 2D coordinate;
      assigning, based on the sensor data, a confidence indicator to the computed surface height; and
      storing the computed surface height and the assigned confidence indicator for the 2D coordinate in a database, thereby building the 2D elevation map.
26. A non-transitory computer-readable storage medium with instructions stored thereon that, when executed by a computing system, cause the computing system to perform a method of building a two-dimensional (2D) elevation map, the method comprising:
   receiving sensor data regarding a 2D coordinate in a 2D coordinate system, wherein the sensor data is acquired by one or more sensors of an aerial vehicle;
   computing, based on the sensor data, a surface height for the 2D coordinate;
   assigning, based on the sensor data, a confidence indicator to the computed surface height; and
   storing the computed surface height and the assigned confidence indicator for the 2D coordinate in a database, thereby building the 2D elevation map.
27. A method of managing local information stored on an aerial vehicle, comprising:
   receiving, by an aerial vehicle from a remote system over a communication network, at least a portion of a global 2D elevation map, wherein the global 2D elevation map includes estimated surface heights and confidence indicators associated with the estimated surface heights for a first plurality of 2D coordinates; and
   resolving, with aid of one or more processors, inconsistency between the local information stored on the aerial vehicle and the global 2D elevation map, thereby managing the local information.
28. The method of Aspect 27,
   wherein the local information includes a local 2D elevation map,
   wherein the local 2D elevation map includes estimated surface heights and confidence indicators associated with the estimated surface heights determined by the aerial vehicle for a second plurality of 2D coordinates.
29. The method of Aspect 28, wherein the resolving comprises adding, to the local 2D elevation map, data in the global 2D elevation map for all 2D coordinates that do not belong to the second plurality of 2D coordinates.
30. The method of Aspect 28, the resolving comprising replacing, for one or more 2D coordinates that are in both the first and the second plurality of 2D coordinates, data in the local 2D elevation map with corresponding data in the global 2D elevation map.
31. The method of Aspect 28, wherein the local 2D elevation map also includes, for at least one of the second plurality of 2D coordinates, a timestamp indicating when sensor data from which an estimated surface height and associated one or more confidence indicators were derived were acquired, in the local 2D elevation map.
32. The method of Aspect 28, further comprising transmitting, to the remote system, data in the local 2D elevation map based on a result of the resolving.
33. The method of Aspect 32, wherein the data transmitted to the remote system includes data in the local 2D elevation map for all 2D coordinates that do not belong to the first plurality of 2D coordinates.
34. The method of Aspect 32, wherein the transmitted data includes data in the local 2D elevation map for one or more 2D coordinates that belong to the first plurality of 2D coordinates.
35. The method of Aspect 34, further comprising selecting the one or more 2D coordinates based on a comparison of a combination of an estimated surface height and a confidence indicator for each 2D coordinate in the local map and in the global map.
36. The method of Aspect 27, wherein the resolving includes adding the global 2D elevation map to the local information.
37. The method of Aspect 27, further comprising:
   updating the local information based on a result of the resolving; and
   storing the updated the local information on the aerial vehicle.
38. The method of Aspect 27, further comprising transmitting an identifier of the aerial vehicle to the remote system.
39. The method of Aspect 27, further comprising transmitting a request to the remote system for the global 2D elevation map, in response to which the global 2D elevation map is received.
40. The method of Aspect 39,
   wherein the request indicates a specific region, and
   wherein the global map includes data corresponding to the specific region.
41. The method of Aspect 28, wherein each confidence indicator associated with an estimated surface height is related to one or more of the followings: a) a feature related to the aerial vehicle, b) an environmental condition associated with the aerial vehicle, or c) a condition of a sensor onboard the aerial vehicle used to generate data from which the estimated surface height is computed, at a time when the sensor generates the data.
42. The method of Aspect 27, wherein the one or more processors are onboard the aerial vehicle.
43. The method of Aspect 27, wherein the receiving and the resolving are performed when the aerial vehicle is airborne.
44. A system for updating local information with a global 2D elevation map, comprising:
   at least one memory; and
   at least one processor connected with the at least one memory and configured to perform:
      receiving, from a remote system over a communication network, at least a portion of a global 2D elevation map, wherein the global 2D elevation map includes estimated surface heights and confidence indicators associated with the estimated surface heights for a first plurality of 2D coordinates; and
      resolving, with aid of one or more processors, inconsistency between the local information stored on the aerial vehicle and the global 2D elevation map, thereby managing the local information.
45. A non-transitory computer-readable storage medium with instructions stored thereon that, when executed by a computing system, cause the computing system to perform a method of updating local information with a global 2D elevation map, the method comprising:
   receiving, from a remote system over a communication network, at least a portion of a global 2D elevation map, wherein the global 2D elevation map includes estimated surface heights and confidence indicators associated with the estimated surface heights for a first plurality of 2D coordinates; and
   resolving, with aid of one or more processors, inconsistency between the local information stored on the aerial vehicle and the global 2D elevation map, thereby managing the local information.
46. A method of managing two-dimensional (2D) elevation data, comprising:
   receiving, from a first movable object over a first communication network, a first local elevation map comprising an estimated surface height and a confidence indicator associated with the estimated surface height for each of a first set of one or more 2D coordinates;
   receiving, from a second movable object over a second communication network, a second local elevation map comprising an estimated surface height and a confidence indicator associated with the estimated surface height for each of a second set of one or more 2D coordinates; and
   resolving, with aid of one or more processors, inconsistency between the first local elevation map and the second local elevation map to update a global elevation map.
47. The method of Aspect 46, further comprising
   sending a request to one or more aerial vehicles for elevation maps,
   wherein the first or the second local elevation map is received in response to the request.
48. The method of Aspect 46, wherein the first or the second movable objects is an aerial vehicle.
49. The method of Aspect 46, wherein each confidence indicator associated with an estimated surface height is related to one or more of the following: a) a feature related to the aerial vehicle, b) an environmental condition associated with the aerial vehicle, or c) a condition of a sensor onboard the aerial vehicle, the sensor used to generate data from which the estimated surface height is computed.
50. The method of Aspect 49, wherein the condition of the sensor includes a sensor resolution.
51. The method of Aspect 49, wherein the environment condition includes a light condition or a GPS signal strength.
52. The method of Aspect 46, wherein the resolving includes, for a 2D coordinate that belongs to both the first and the second sets of 2D coordinates, selecting, for inclusion into the global elevation map, estimated surface height and confidence indicator for the 2D point in the first local elevation map over the second local elevation map when the confidence indicator for the 2D point in the first local elevation map is larger than the confidence indicator for the 2D point in the second local elevation map.
53. The method of Aspect 46, wherein the resolving is performed, for a 2D coordinate that belongs to the first and the second sets of 2D coordinates, based on a comparison between a combination of the estimated surface height and the associated confidence indicator for the 2D coordinate in the first local elevation map and a combination of the estimated surface height and the associated confidence indicator for the 2D coordinate in the second local elevation map.
54. The method of Aspect 53, wherein the resolving includes, for the 2D coordinate, selecting, for inclusion into the global elevation map, estimated surface height and confidence indicator in the first local elevation map over the second local elevation map when the estimated surface height in the first local elevation map is larger than in the second local elevation map and the confidence indicator in the first local elevation map is larger than a predetermined threshold.
55. The method of Aspect 46,
   wherein the first local elevation map also includes, for a 2D coordinate that belongs to the first and second sets of 2D coordinates, a timestamp indicating when sensor data from which the estimated surface height and the associated confidence indicator were derived were acquired, and
   wherein the second local elevation map includes, for the 2D coordinate, a timestamp indicating when the estimated surface height and the associated confidence indicator were updated.
56. The method of Aspect 55, wherein the resolving includes, for the 2D coordinate, selecting, for inclusion in the global elevation map, estimated surface height and confidence indicator in the first local elevation map when the timestamp in the first local elevation map indicates a later time than the timestamp in the second local elevation map.
57. The method of Aspect 46,
   wherein the first local elevation map includes, for a 2D coordinate that belong to both the first and second sets of 2D coordinates, an identifier of a first aerial vehicle that contributed to creating estimated surface height and confidence indicator in the first local elevation map, and
   wherein the second local elevation map includes, for the 2D coordinate, an identifier of a second aerial vehicle that contributed to creating estimated surface height and confidence indicator in the second local elevation map.
58. The method of Aspect 57, further comprising
   prioritizing a plurality of aerial vehicles, including the first and the second aerial vehicles,
   wherein the resolving includes, for the 2D coordinate, selecting, for inclusion estimated surface height and confidence indicator in the global elevation map, estimated surface height and confidence indicator in the first local elevation map when the first aerial vehicle has a higher priority than the second aerial vehicle.
59. The method of Aspect 58, wherein the prioritizing is based on a condition associated with each aerial vehicle of the plurality of aerial vehicles or a sensor onboard the each aerial vehicle.
60. The method of Aspect 46, further comprising transmitting part or all of the global elevation map to one or more aerial vehicles.
61. The method of Aspect 60, further comprising:
   receiving a request from a third aerial vehicle for the global elevation map,
   wherein the transmitting is performed in response to the request.
62. The method of Aspect 60, wherein the transmitting is performed in response to an update to the global map.
63. The method of Aspect 46,
   wherein the first local elevation map further comprises a height range associated with the estimated surface height for one of the first set of 2D coordinates, and
   wherein the second local elevation map further comprises a height range associated with the estimated surface height for one the second set of 2D coordinates.
64. The method of Aspect 63, wherein a height range associated with an estimated surface height indicates a height range of a sensor which acquired data that led to the estimated surface height at the time of data acquisition.
65. The method of Aspect 63, wherein the resolving is performed for a 2D coordinate that belongs to both the first and the second sets of 2D coordinates only when the height ranges for the 2D coordinate in the first and second local elevation maps are identical.
66. The method of Aspect 63, further comprising, for a 2D coordinate that belongs to both the first and the second sets of 2D coordinates, when the height range in the first local elevation map is less than the height range in the second local elevation map, selecting for inclusion in the global elevation map estimated surface height and confidence indicator in the second local elevation map.
67. The method of Aspect 46, further comprising logging an update to the global elevation map.
68. The method of Aspect 46, further comprising:
   color-coding estimated surface heights or confidence indicators in the global elevation map; and
   sending a graphical representation of the global map based on the color coding to a display device.
69. A system for managing two-dimensional (2D) elevation data, comprising:
   at least one memory;
   at least one processor connected with the at least one memory and configured to perform:
      receiving, from a first movable object over a first communication network, a first local elevation map comprising an estimated surface height and a confidence indicator associated with the estimated surface height for each of a first set of 2D coordinate(s);
      receiving, from a second movable object over a second communication network, a second local elevation map comprising an estimated surface height and a confidence indicator associated with the estimated surface height for each of a second set of 2D coordinate(s); and
      resolving, with aid of one or more processors, inconsistency with respect to the estimated surface height or the confidence indicator between the first local elevation map and the second local elevation map to update a global elevation map.
70. A non-transitory computer-readable storage medium with instructions stored thereon that, when executed by a computing system, cause the computing system to perform a method of managing two-dimensional (2D) elevation data, the method comprising:
   receiving, from a first movable object over a first communication network, a first local elevation map comprising an estimated surface height and a confidence indicator associated with the estimated surface height for each of a first set of 2D coordinate(s);
   receiving, from a second movable object over a second communication network, a second local elevation map comprising an estimated surface height and a confidence indicator associated with the estimated surface height for each of a second set of 2D coordinate(s); and
   resolving, with aid of one or more processors, inconsistency with respect to the estimated surface height or the confidence indicator between the first local elevation map and the second local elevation map to update a global elevation map.

## Claims

1. A method of managing local information stored on an aerial vehicle, comprising:
receiving, by an aerial vehicle from a remote system over a communication network, at least a portion of a global 2D elevation map, wherein the global 2D elevation map includes estimated surface heights and confidence indicators associated with the estimated surface heights for a first plurality of 2D coordinates; and
resolving, with aid of one or more processors, inconsistency between the local information stored on the aerial vehicle and the global 2D elevation map, thereby managing the local information.

2. The method of claim 1,
wherein the local information includes a local 2D elevation map,
wherein the local 2D elevation map includes estimated surface heights and confidence indicators associated with the estimated surface heights determined by the aerial vehicle for a second plurality of 2D coordinates.

3. The method of claim 2, wherein the resolving comprises adding, to the local 2D elevation map, data in the global 2D elevation map for all 2D coordinates that do not belong to the second plurality of 2D coordinates.

4. The method of claim 2, the resolving comprising replacing, for one or more 2D coordinates that are in both the first and the second plurality of 2D coordinates, data in the local 2D elevation map with corresponding data in the global 2D elevation map.

5. The method of claim 2, wherein the local 2D elevation map also includes, for at least one of the second plurality of 2D coordinates, a timestamp indicating when sensor data from which an estimated surface height and associated one or more confidence indicators were derived were acquired, in the local 2D elevation map.

6. The method of claim 2, wherein each confidence indicator associated with an estimated surface height is related to one or more of the followings: a) a feature related to the aerial vehicle, b) an environmental condition associated with the aerial vehicle, or c) a condition of a sensor onboard the aerial vehicle used to generate data from which the estimated surface height is computed, at a time when the sensor generates the data.

7. A method of managing two-dimensional (2D) elevation data, comprising:
receiving, from a first movable object over a first communication network, a first local elevation map comprising an estimated surface height and a confidence indicator associated with the estimated surface height for each of a first set of one or more 2D coordinates;
receiving, from a second movable object over a second communication network, a second local elevation map comprising an estimated surface height and a confidence indicator associated with the estimated surface height for each of a second set of one or more 2D coordinates; and
resolving, with aid of one or more processors, inconsistency between the first local elevation map and the second local elevation map to update a global elevation map.

8. The method of claim 7, wherein each confidence indicator associated with an estimated surface height is related to one or more of the following: a) a feature related to the aerial vehicle, b) an environmental condition associated with the aerial vehicle, or c) a condition of a sensor onboard the aerial vehicle, the sensor used to generate data from which the estimated surface height is computed.

9. The method of claim 7, wherein the resolving includes, for a 2D coordinate that belongs to both the first and the second sets of 2D coordinates, selecting, for inclusion into the global elevation map, estimated surface height and confidence indicator for the 2D point in the first local elevation map over the second local elevation map when the confidence indicator for the 2D point in the first local elevation map is larger than the confidence indicator for the 2D point in the second local elevation map.

10. The method of claim 7, wherein the resolving is performed, for a 2D coordinate that belongs to the first and the second sets of 2D coordinates, based on a comparison between a combination of the estimated surface height and the associated confidence indicator for the 2D coordinate in the first local elevation map and a combination of the estimated surface height and the associated confidence indicator for the 2D coordinate in the second local elevation map.

11. The method of claim 7,
wherein the first local elevation map also includes, for a 2D coordinate that belongs to the first and second sets of 2D coordinates, a timestamp indicating when sensor data from which the estimated surface height and the associated confidence indicator were derived were acquired, and
wherein the second local elevation map includes, for the 2D coordinate, a timestamp indicating when the estimated surface height and the associated confidence indicator were updated.

12. The method of claim 7,
wherein the first local elevation map includes, for a 2D coordinate that belong to both the first and second sets of 2D coordinates, an identifier of a first aerial vehicle that contributed to creating estimated surface height and confidence indicator in the first local elevation map, and
wherein the second local elevation map includes, for the 2D coordinate, an identifier of a second aerial vehicle that contributed to creating estimated surface height and confidence indicator in the second local elevation map.

13. The method of claim 7,
wherein the first local elevation map further comprises a height range associated with the estimated surface height for one of the first set of 2D coordinates, and
wherein the second local elevation map further comprises a height range associated with the estimated surface height for one the second set of 2D coordinates.

14. A system, comprising:
at least one memory;
at least one processor connected with the at least one memory and configured to perform the operations of the method of any one of claims 1 to 13.

15. A non-transitory computer-readable storage medium with instructions stored thereon that, when executed by a computing system, cause the computing system to perform the operations of the method of any one of claims 1 to 13
